# EUROPÄISCHE PATENTSCHRIFT

(11) **EP 3 504 389 B1**
(45) Veröffentlichungstag und Bekanntmachung des Hinweises auf die Patenterteilung: **26.05.2021**
(21) Anmeldenummer: 17758096.6
(22) Anmeldetag: 15.08.2017
(51) Int. Cl.: E05B 81/78, E05B 85/10

(54) **ERFASSUNGSSYSTEM ZUR DETEKTION EINER BETÄTIGUNG BEI EINER GRIFFVORRICHTUNG EINES FAHRZEUGES**
SENSING SYSTEM FOR DETECTING ACTUATION OF A HANDLE DEVICE OF A VEHICLE
DISPOSITIF DE DÉTECTION POUR LA DÉTECTION DE L'ACTIONNEMENT SUR UN DISPOSITIF DE POIGNÉE D'UN VÉHICULE

(30) Priorität: 23.08.2016 DE 102016115570; 05.09.2016 DE 102016116578
(43) Veröffentlichungstag der Anmeldung: 03.07.2019
(60) Teilanmeldung: 20192586.4
(73) Patentinhaber: HUF Hülsbeck & Fürst GmbH & Co. KG, 42551 Velbert (DE)
(72) Erfinder: BEXTERMÖLLER, Hubert, 45468 Mülheim an der Ruhr (DE)
(74) Vertreter: Patentanwälte Bals & Vogel
(86) Internationale Anmeldenummer: PCT/EP2017/070669
(87) Internationale Veröffentlichungsnummer: WO 2018/036867

(56) Entgegenhaltungen:
- EP-A1- 1 099 810
- EP-A2- 2 664 734
- WO-A1-2016/041996
- DE-A1-102008 019 335
- DE-A1-102014 110 091
- FR-A1- 2 889 553

## Beschreibung

Die vorliegende Erfindung betrifft ein Erfassungssystem zur Detektion einer Betätigung bei einer Griffvorrichtung eines Fahrzeuges gemäß der im Oberbegriff des Anspruchs 1 näher definierten Art. Ferner bezieht sich die Erfindung auf eine Griffvorrichtung nach dem Oberbegriff des Anspruchs 4 sowie auf ein Verfahren zur Detektion einer Betätigung einer Griffvorrichtung gemäß dem Oberbegriff von Anspruch 11.

Es ist aus dem Stand der Technik bekannt, dass zur Detektion einer Betätigung bei einer Griffvorrichtung, insbesondere zur Detektion eines Kurzhubes, ein Sensor genutzt wird, welcher bspw. am Griffteil der Griffvorrichtung angeordnet ist. Durch diese direkte Anordnung am Griffteil kann die tatsächliche Position des Griffteils erfasst werden, und bei einer ausreichenden Veränderung der Position von einer Betätigung ausgegangen werden. Diese detektierte Betätigung führt dann bspw. zu einer Ansteuerung einer Schließvorrichtung eines Fahrzeuges und/oder zur Initiierung eines Authentifizierungsvorganges.

Aus den Schriften EP 1 099 810 A1 und FR 2 889 553 A1 sind alternative Vorrichtungen bekannt.

Es hat sich hierbei allerdings als Nachteil herausgestellt, dass bei der Detektion der Betätigung auch Bewegungen erfasst werden, welche nicht der Betätigung des Griffteils dienen. Insbesondere Bewegungen wie Scherkräfte oder wärmebedingte Ausdehnungen am Griffteil können dabei eine Fehldetektion der Betätigung hervorrufen. Maßnahmen zur Vermeidung und/oder Reduzierung solcher Fehldetektionen sind dabei häufig konstruktiv aufwendig und mit hohen Kosten verbunden.

Es ist daher eine Aufgabe der vorliegenden Erfindung, die voranstehend beschriebenen Nachteile zumindest teilweise zu beheben. Insbesondere ist es Aufgabe der Erfindung, eine kostengünstigere und/oder einfachere und/oder zuverlässigere Detektion der Betätigung bei einer Griffvorrichtung zu ermöglichen. Ferner ist es insbesondere eine Aufgabe, eine Detektion bzw. Abfrage der Betätigung durchführen zu können, welche einen hohen Sicherheitsstandard erfüllt.

Die voranstehende Aufgabe wird gelöst durch ein Erfassungssystem mit den Merkmalen des Anspruchs 1, durch eine Griffvorrichtung mit den Merkmalen des Anspruchs 4 sowie durch ein Verfahren mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Erfassungssystem beschrieben sind, selbstverständlich auch im Zusammenhang mit der erfindungsgemäßen Griffvorrichtung sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Erfassungssystem zur Detektion einer Betätigung (bei) einer Griffvorrichtung eines Fahrzeuges, mit einer Bewegungsvorrichtung zur Bewegung eines Griffteils (z. B. Türgriffs) der Griffvorrichtung von einer Ruhestellung in eine Betriebsstellung. Die Bewegungsvorrichtung kann dabei bspw. zumindest ein Getriebeelement oder dergleichen umfassen, um mindestens eine Bewegung zu übertragen.

Das Fahrzeug ist bspw. als ein Kraftfahrzeug und/oder als ein Personenkraftfahrzeug und/oder als ein Elektrofahrzeug und/oder als ein selbstfahrendes (autonomes) Fahrzeug ausgeführt.

Es ist es dabei vorgesehen, dass die Bewegungsvorrichtung zur Bewirkung, d. h. insbesondere Übertragung und/oder Erzeugung, der Bewegung des Griffteils in einen ersten Bewegungsverlauf bringbar ist, insbesondere durch eine Antriebsvorrichtung, und nach vollständiger) Durchführung des ersten Bewegungsverlaufs in einen zweiten Bewegungsverlauf bringbar ist, insbesondere durch das Griffteil.

Hierbei ist vorgesehen, dass ein Vergleichssensorelement und ein Betätigungssensorelement an der Bewegungsvorrichtung angeordnet sind, sodass der erste Bewegungsverlauf A durch eine erste Erfassung des Vergleichssensorelements und durch eine zweite Erfassung des Betätigungssensorelements (insbesondere simultan) auswertbar ist. Weiter ist der zweite Bewegungsverlauf B (insbesondere nur) durch die zweite Erfassung des Betätigungssensorelements auswertbar, wodurch die Betätigung detektierbar ist. Mit anderen Worten kann durch die erste Erfassung durch das Vergleichssensorelement und durch die zweite Erfassung durch das Betätigungssensorelement der erste Bewegungsverlauf festgestellt werden, wobei (insbesondere ausschließlich) der zweite Bewegungsverlauf anhand der zweiten Erfassung durch das Betätigungssensorelement ausgewertet wird. Somit stehen vorteilhafterweise mindestens zwei Sensoren zur Verfügung, um insbesondere den ersten Bewegungsverlauf von dem zweiten Bewegungsverlauf zu unterscheiden. Hierzu kann bspw. ein Vergleich der ersten Erfassung mit der zweiten Erfassung durchgeführt werden, wobei vorzugsweise das Vergleichssensorelement als Referenz dient. Hierdurch wird der Vorteil erzielt, dass eine besonders einfache und zuverlässige Detektion der Betätigung der Griffvorrichtung möglich ist, wobei der erste Bewegungsverlauf zuverlässig vom zweiten Bewegungsverlauf abgegrenzt werden kann.

Ferner ist es denkbar, dass eine Diagnose, bevorzugt eine ASIL-relevante Diagnose (ASIL: Automotive Safety Integrity Level, insbesondere nach ISO 26262), insbesondere des Erfassungssystems, durchgeführt werden kann. Die Diagnose wird bspw. derart durchgeführt, dass anhand der Diagnose ein fehlerfreier Zustand oder ein Fehlerzustand der Griffvorrichtung oder des Erfassungssystems oder einzelner Sensoren direkt ermittelbar ist.

Bevorzugt erfolgt hierzu ein Vergleich von Erfassungswerten mit Vergleichswerten, besonders bevorzugt in redundanter Weise. Die Erfassungswerte können bevorzugt durch die erste und/oder zweite Erfassung ermittelt werden. Der Vergleich wird bspw. arithmetisch durch eine Verarbeitungseinheit durchgeführt. Somit kann auch der Vorteil erzielt werden, dass eine ASIL-konforme Detektion der Betätigung möglich ist. Insbesondere ist es hierbei vorgesehen, zur Gefahrenminimierung eine Diagnose der Funktionstüchtigkeit der Schaltung (d. h. insbesondere der genannten Sensorelemente) durchzuführen. Insbesondere wird es so ermöglicht, kostengünstig einen hohen ASIL-Level, d. h. eine erhöhte Sicherheit, zu erreichen. Dabei kann vorzugsweise eine Antriebsvorrichtung, insbesondere ein Motor, bevorzugt Stellmotor oder Schrittmotor, der Griffvorrichtung ggf. mit hoher Last gefahren werden, und dennoch eine gute und zuverlässige Diagnose erfolgen.

Bevorzugt ist es dabei möglich, dass beim ersten Bewegungsverlauf die Bewegungsvorrichtung aktiv das Griffteil bewegt (dies entspricht einem durch die Bewegungsvorrichtung bewirkten ersten Bewegungsverlauf bzw. einer Übertragung der Bewegung von der Bewegungsvorrichtung an das Griffteil), insbesondere längsverschiebt, und die Bewegungsvorrichtung durch die Betätigung des Griffteils beim zweiten Bewegungsverlauf bewegt wird (dies entspricht einem durch das Griffteil bewirkten zweiten Bewegungsverlauf, insbesondere durch eine Drehung und/oder Schwenkung, bzw. einer Übertragung der Bewegung von dem Griffteil an die Bewegungsvorrichtung). Hierdurch ist eine besonders einfache und kostengünstige Realisierung des Erfassungssystems möglich.

Es kann weiter möglich sein, dass die Bewegungsvorrichtung ein erstes Bewegungselement und ein zweites Bewegungselement umfasst, welche zumindest (oder nur) im ersten Bewegungsverlauf zur Bewegungsübertragung miteinander (mechanisch) gekoppelt sind, wobei das Vergleichssensorelement auf das erste Bewegungselement ausgerichtet ist, um durch die erste Erfassung eine Bewegung des ersten Bewegungselements zu erfassen, und das Betätigungssensorelement auf das zweite Bewegungselement ausgerichtet ist, um durch die zweite Erfassung eine Bewegung des zweiten Bewegungselements zu erfassen. Insbesondere kann es möglich sein, dass das erste Bewegungselement und das zweite Bewegungselement im zweiten Bewegungsverlauf voneinander (mechanisch) entkoppelt sind. Dies hat den Vorteil, dass der erste Bewegungsverlauf zuverlässig vom zweiten Bewegungsverlauf unterschieden werden kann.

Bevorzugt führt das Vergleichssensorelement die erste Erfassung durch, um die Bewegung des ersten Bewegungselementes quantitativ zu erfassen und/oder zu überwachen. Besonders bevorzugt führt das Betätigungssensorelement die zweite Erfassung durch, um die Bewegung des zweiten Bewegungselementes quantitativ zu erfassen und/oder zu überwachen. Vorzugsweise sind dabei das erste Bewegungselement und/oder das zweite Bewegungselement feststehend (gemeint ist: ortsfest, aber drehbar) in einer Griffvorrichtung anordbar, sodass Fehlereinflüsse zuverlässig vermieden werden können.

Vorteilhaft ist es zudem, wenn das Vergleichssensorelement und das Betätigungssensorelement mit einer (insbesondere einzigen) Auswertevorrichtung verbunden sind, sodass (insbesondere nur) der erste Bewegungsverlauf der Bewegungsvorrichtung, insbesondere redundant und/oder gleichartig, anhand der ersten und zweiten Erfassung durch die Auswertevorrichtung auswertbar ist, und insbesondere der erste Bewegungsverlauf redundant überwachbar und/oder prüfbar ist, um eine Plausibilisierung und/oder Detektion eines fehlerhaften ersten Bewegungsverlaufs durchzuführen. Somit können insbesondere auch nicht plausible Arbeitsbereiche dadurch erfasst werden, dass eine Kopplung des ersten Bewegungselementes mit dem zweiten Bewegungselement bei dem ersten Bewegungsverlauf ausgewertet wird. Unterscheidet sich dabei die erste Erfassung von der zweiten Erfassung und/oder die erste Bewegung des ersten Bewegungselementes von der zweiten Bewegung des zweiten Bewegungselementes, so kann daraus auf eine fehlerhafte Mechanik und/oder Elektronik geschlossen werden. Bspw. kann dann die Bewegungsvorrichtung Schaden genommen haben, sodass bspw. eine entsprechende Fehlermeldung initiiert werden kann. Dies hat den Vorteil, dass ein fehlerhafter Zustand der Bewegungsvorrichtung und/oder der Griffvorrichtung sicher und zuverlässig erfasst werden kann. Dabei ist es denkbar, dass ein Testlauf zur Funktionsüberprüfung von der erfindungsgemäßen Griffvorrichtung selbstständig durchgeführt wird, wodurch die Sicherheit zusätzlich erhöht wird.

Insbesondere bezeichnet "gleichartig" in Bezug auf wenigstens zwei Verläufe, wie den Verlauf der Erfassungen und/oder einen ersten und zweiten Erfassungswertverlauf, dass beide Verläufe für einen identischen Vorgang spezifisch sind, z. B. für einen ersten Bewegungsverlauf. Bevorzugt liegen gleichartige Verläufe vor, wenn z. B. die Verläufe auf einen gleichen absoluten Drehwinkel, d. h. eine quantitativ gleiche Drehung ohne Berücksichtigung des Vorzeichens bzw. der Drehrichtung, hinweisen. Dies trifft insbesondere dann zu, wenn die Bewegungselemente, z. B. als Zahnräder oder Wellen, das gleiche Übertragungsverhältnis in Bezug auf die Bewegung des Griffteils aufweisen. Anstelle der Erfassung einer Drehung kann auch eine Kraft- und/oder Längenänderung detektierbar sein.

Des Weiteren ist es im Rahmen der Erfindung optional möglich, dass das Betätigungssensorelement und/oder das Vergleichssensorelement als gleichartige Sensoren ausgeführt sind, vorzugsweise jeweils als Drehsensor (Rotationssensor), bevorzugt als magnetischer Sensor, z. B. als Hall-Sensor. Insbesondere kann so auf einfache Weise eine Rotation der Bewegungselemente erfasst werden.

Auch kann es möglich sein, dass wenigstens eines der Sensorelemente, d. h. bspw. das Betätigungssensorelement und/oder das Vergleichssensorelement, als wenigstens einer der nachfolgenden Sensoren ausgebildet ist:
- Drehwinkelsensor, welche vorzugsweise in einer Antriebsvorrichtung integriert ist,
- elektrischer und/oder elektronischer Sensor, vorzugsweise Drehsensor,
- aktiver Messaufnehmer,
- passiver Messaufnehmer,
- kapazitiver Sensor,
- mechanischer Sensor,
- piezoelektrischer Sensor,
- induktiver Sensor,
- optischer Sensor,
- magnetischer Sensor (insbesondere Hall-Sensor).

Insbesondere kann es möglich sein, dass wenigstens eines der Sensorelemente im Bereich einer Lagerstelle der Griffvorrichtung angeordnet ist, um eine Drehbewegung und/oder Translationsbewegung zu erfassen.

Ebenfalls kann unter einem "Sensor" im weiteren Sinne auch eine elektrische Information, bspw. eine Ansteuerungsinformation, bevorzugt für einen Motor, verstanden werden. So kann es bspw. vorgesehen sein, dass bei der ersten Erfassung zur Bestimmung des ersten Erfassungsergebnisses ein Ansteuerungssignal als Ansteuerungsinformation für einen Motor ausgewertet wird. Auch kann es möglich sein, dass bei der zweiten Erfassung zur Bestimmung des zweiten Erfassungsergebnisses ein Erfassungssignal, vorzugsweise ein Messsignal, bspw. von einem Hall-Sensor, ausgewertet wird. Selbstverständlich ist es auch möglich, dass beide Sensorelemente (oder auch weitere Sensorelemente) vorgesehen sind, welche gleichartig ausgebildet sind (z. B. jeweils Ansteuerungssignale oder Messsignale erfassen).

Bevorzugt kann es vorgesehen sein, dass das Betätigungssensorelement und/oder das Vergleichssensorelement (bspw. direkt und/oder unmittelbar) an einer Platine (insbesondere der Griffvorrichtung) angeordnet sind. Insbesondere sind das Betätigungssensorelement und/oder das Vergleichssensorelement dabei elektrisch leitend mit einer Leiterbahn der Platine und/oder mit weiteren Elektronikkomponenten (der Griffvorrichtung) verbunden. Die Elektronikkomponenten umfassen z. B. eine Verarbeitungseinheit der Griffvorrichtung. Vorzugsweise weist wenigstens eines der Bewegungselemente (jeweils) ein Zapfenelement (bspw. einen Zapfen, Stab oder dergleichen) auf, wobei bevorzugt das jeweilige Bewegungselement so angeordnet ist, dass das jeweilige Zapfenelement in das Betätigungssensorelement bzw. das Vergleichssensorelement eintaucht und/oder jeweils in ein Lagerelement mit jeweils dem Betätigungssensorelement bzw. dem Vergleichssensorelement eintaucht. Insbesondere sind dabei das Betätigungssensorelement und/oder das Vergleichssensorelement jeweils als Hall-Sensor ausgebildet. Bevorzugt umfasst das Zapfenelement wenigstens ein magnetisches Element (Magnetelement). Somit ist eine einfache und platzsparende Erfassung am jeweiligen Bewegungselement möglich. Bevorzugt ist dabei das Betätigungssensorelement und/oder das Vergleichssensorelement in einer Drehachse für das Griffteil angeordnet und/oder integriert. Das Zapfenelement kann bspw. auch als Drehzapfen ausgeführt sein, und bevorzugt drehbar gelagert und/oder schwenkbar sein, insbesondere in der Drehachse.

Vorzugsweise kann wenigstens eines der Bewegungselemente ein Magnetelement umfassen. Insbesondere ist das Magnetelement derart am jeweiligen Bewegungselement angeordnet, dass bei einer Bewegung des Bewegungselements (auch eine Bewegung des Magnetelementes erfolgt und) die Bewegung anhand einer Veränderung eines magnetischen Feldes erfasst werden kann, wobei vorzugsweise das magnetische Feld durch das Magnetelement erzeugt wird. Bevorzugt ist dabei ein erstes Bewegungselement mit einem ersten Magnetelement im Bereich des Vergleichssensorelements und ein zweites Bewegungselement mit einem zweiten Magnetelement im Bereich des Betätigungssensorelements angeordnet. Bevorzugt ist ein erstes Zapfenelement (insbesondere mit dem ersten Magnetelement) des ersten Bewegungselements in das Vergleichssensorelement eingetaucht. Besonders bevorzugt ist ein zweites Zapfenelement (insbesondere mit dem zweiten Magnetelement) des zweiten Bewegungselements in das Betätigungssensorelement eingetaucht.

Optional kann das jeweilige Bewegungselement zumindest teilweise aus Metall und/oder Kunststoff ausgebildet sein, und/oder ein ferromagnetisches Material aufweisen. Insbesondere ist wenigstens eines der Bewegungselemente als Teil des Griffteils ausgeführt, vorzugsweise am Griffteil starr und/oder drehfest und/oder verschiebefest befestigt, besonders bevorzugt monolithisch mit dem Griffteil ausgeführt. Vorzugsweise wird dabei dann durch die Bewegung des Griffteils eine Kraft und/oder eine Bewegung und/oder ein Moment, insbesondere Drehmoment, an das (insbesondere zweite) Bewegungselement übertragen. Insbesondere erfolgt eine Bewegung des Bewegungselements dann relativ zum jeweiligen Sensorelement, d. h. insbesondere die Bewegung des ersten Bewegungselements relativ zum Vergleichssensorelement und die Bewegung des zweiten Bewegungselements relativ zum Betätigungssensorelement. Auf diese Weise kann die Bewegung des Bewegungselements zuverlässig erfasst werden. Bevorzugt ist das Bewegungselement als eine Drehachse des Griffteils ausgeführt. Unter "drehfest" wird dabei insbesondere verstanden, dass sich das entsprechende Bewegungselement mit dem Griffteil "mitdreht", insbesondere um die Griffteildrehachse.

Weiter ist es denkbar, dass der erste Bewegungsverlauf der Bewegungsvorrichtung redundant und/oder gleichartig durch die erste und zweite Erfassung auswertbar ist. Dabei kann insbesondere anhand der ersten Erfassung ein erster (zeitlicher) Erfassungswertverlauf und anhand der zweiten Erfassung ein zweiter (zeitlicher) Erfassungswertverlauf ermittelt werden, welche insbesondere gleichartig sind. Gleichartig bezieht sich bspw. darauf, dass z. B. eine ermittelte absolute Drehwinkeldifferenz identisch oder proportional ist, wobei sich bspw. die Richtung der Drehung unterscheiden kann. Insbesondere ist der zweite Bewegungsverlauf der Bewegungsvorrichtung unredundant auswertbar, wobei vorzugsweise bei dem zweiten Bewegungsverlauf sich der erste Erfassungswertverlauf von dem zweiten Erfassungswertverlauf unterscheidet, insbesondere andersartig ist (z. B. eine unterschiedliche absolute Drehwinkeldifferenz aufweist). Bevorzugt ist dann nur der zweite Erfassungswertverlauf für den zweiten Bewegungsverlauf spezifisch, und der erste Erfassungswertverlauf für den zweiten Bewegungsverlauf unspezifisch. Dies hängt insbesondere damit zusammen, dass beim zweiten Bewegungsverlauf im Wesentlichen keine Rotation des ersten Bewegungselementes erfolgt. Damit ist die Bewegung des ersten Bewegungselementes bei einem Stillstand des Griffteils identisch zu einer Bewegung des ersten Bewegungselementes im zweiten Bewegungsverlauf, wenn also eine Bewegung des Griffteils erfolgt. Entsprechend kann anhand (nur) des ersten Erfassungswertverlaufs nicht unterschieden werden, ob das Griffteil stillsteht oder sich im zweiten Bewegungsverlauf bewegt. Somit ist der erste Erfassungswertverlauf unspezifisch für den zweiten Bewegungsverlauf. Dies hat jedoch den Vorteil, dass durch den Vergleich des ersten Erfassungswertverlaufs mit dem zweiten Erfassungswertverlauf sich der zweite Bewegungsverlauf zuverlässig detektieren lässt. Denn die anhand des zweiten Erfassungswertverlaufs feststellbare Bewegung des zweiten Bewegungselementes im zweiten Bewegungsverlauf unterscheidet sich signifikant von der Bewegung des zweiten Bewegungselementes bei einem Stillstand des Griffteils.

Auch kann es möglich sein, dass sowohl der erste Bewegungsverlauf der Bewegungsvorrichtung als auch der zweite Bewegungsverlauf der Bewegungsvorrichtung redundant und/oder gleichartig durch die erste und zweite Erfassung auswertbar ist. Ebenfalls Gegenstand der Erfindung ist eine Griffvorrichtung für ein bewegliches Teil eines Fahrzeuges, insbesondere zum Öffnen des beweglichen Teils, insbesondere einer Tür oder Heckklappe oder dergleichen, mit einem beweglich gelagerten Griffteil und einer Bewegungsvorrichtung.

Es ist vorgesehen, dass durch wenigstens einen ersten Bewegungsverlauf der Bewegungsvorrichtung das Griffteil von einer Ruhestellung in eine Betriebsstellung bewegbar ist, und das Griffteil in der Betriebsstellung (insbesondere zum Öffnen des beweglichen Teils) manuell betätigbar ist, sodass bei der Betätigung wenigstens ein zweiter Bewegungsverlauf der Bewegungsvorrichtung erfolgt.

Hierbei ist vorgesehen, dass zumindest ein Vergleichssensorelement und ein Betätigungssensorelement an der Bewegungsvorrichtung angeordnet sind, sodass der erste Bewegungsverlauf durch eine erste Erfassung des Vergleichssensorelements und eine zweite Erfassung des Betätigungssensorelements auswertbar ist, und der zweite Bewegungsverlauf (insbesondere nur) durch die zweite Erfassung des Betätigungssensorelements auswertbar ist, wodurch die Betätigung des Griffteils zuverlässig detektierbar ist.

Damit bringt die erfindungsgemäße Griffvorrichtung die gleichen Vorteile mit sich, wie sie ausführlich mit Bezug auf ein erfindungsgemäßes Erfassungssystem beschrieben worden sind. Zudem kann ein erfindungsgemäßes Erfassungssystem bei der erfindungsgemäßen Griffvorrichtung vorgesehen sein.

Von weiterem Vorteil kann vorgesehen sein, dass wenigstens zwei (oder auch drei) Bewegungselemente der Bewegungsvorrichtung vorgesehen sind, insbesondere welche jeweils als zumindest ein drehbar gelagertes Rad und/oder als Hebel an einer, insbesondere feststehenden, Achse der Bewegungsvorrichtung und/oder Griffvorrichtung oder als zumindest eine drehbar gelagerte Welle ausgeführt sind, wobei das Vergleichssensorelement auf ein erstes Bewegungselement und das Betätigungssensorelement auf ein zweites Bewegungselement ausgerichtet ist, wobei die Bewegungselemente jeweils in unterschiedlicher Wirkverbindung mit dem Griffteil bringbar sind, sodass vorzugsweise eine erste Bewegung der Bewegungsvorrichtung im ersten Bewegungsverlauf redundant und/oder gleichartig und/oder sowohl durch das Vergleichssensorelement und das Betätigungssensorelement erfassbar ist, und insbesondere eine zweite Bewegung der Bewegungsvorrichtung im zweiten Bewegungsverlauf unterschiedlich durch das Vergleichssensorelement und das Betätigungssensorelement erfassbar ist, sodass durch einen Vergleich der ersten und zweiten Erfassung die Betätigung detektierbar ist. Insbesondere ermöglicht der Vergleich der ersten und zweiten Erfassung, dass Fehlereinflüsse und/oder störende Bewegungen des Griffteils, welche keine Betätigung bewirken sollen, zuverlässig erkannt werden. Bspw. kann wenigstens ein Sensormittel vorgesehen sein, um die Bewegung des Bewegungselements zu erfassen, z. B. einen Drehwinkel oder dergleichen.

Auch ist es vorteilhaft, wenn das Betätigungssensorelement und/oder das Vergleichssensorelement jeweils mehrere Sensormittel, wie den magnetischen Sensor, aufweisen, um die Erfassung durchzuführen. Bspw. können die Sensormittel beabstandet angeordnet sein, um eine Wegstrecke einer Bewegung eines Hebels des Bewegungselements zu erfassen. Bspw. ist hierzu am Hebel ein Indikator, wie ein Magnetelement, befestigt.

In einer weiteren Möglichkeit kann vorgesehen sein, dass das Vergleichssensorelement und das Betätigungssensorelement jeweils im Bereich von unterschiedlichen Bewegungselementen der Bewegungsvorrichtung angeordnet sind, wobei die Bewegungselemente jeweils zumindest rotierbar (und/oder translatorisch bewegbar und/oder schwenkbar) ausgeführt sind, insbesondere als Rotationselemente, vorzugsweise als Welle und/oder als Rad und/oder feststehende (aber drehbar) Achse und/oder Hebelage, sodass vorzugsweise das Vergleichssensorelement und das Betätigungssensorelement als Rotationssensoren zur Erfassung einer Rotation der Bewegungselemente ausgeführt sind. Insbesondere ist das jeweilige Bewegungselement jeweils an einer feststehenden Achse beweglich angeordnet und/oder gelagert, sodass die Bewegungsvorrichtung zwei unterschiedliche, insbesondere feststehende, Achsen aufweist, an denen die Bewegungselemente angeordnet sind.

Der Ausdruck "feststehend" bezieht sich dabei insbesondere auf die (ortsfeste aber drehbare) Anordnung in der Griffvorrichtung, "fest" bezieht sich damit insbesondere nicht auf die Rotierbarkeit. Die feststehende Anordnung bewirkt daher vorzugsweise, dass eine translatorische Bewegung (z. B. des Bewegungselementes) bei einer Bewegung des Griffteils verhindert ist, jedoch eine Rotation (z. B. des Bewegungselementes) stattfinden kann. Damit können störende Einwirkungen, wie bspw. Scherkräfte am Griffteil, zuverlässig für die Detektion unterdrückt werden.

Vorteilhafterweise kann im Rahmen der Erfindung vorgesehen sein, dass das Vergleichssensorelement und das Betätigungssensorelement im Bereich von unterschiedlichen Bewegungselementen der Bewegungsvorrichtung angeordnet sind, wobei die Bewegungselemente jeweils (translatorisch) feststehend ausgebildet und insbesondere innerhalb eines Trägerelements, insbesondere Montageträgers, der Griffvorrichtung angeordnet sind. Hierdurch wird gewährleistet, dass störende Kräfte auf den Türgriff nicht die Bewegung der Bewegungselemente im ersten und zweiten Bewegungsverlauf signifikant beeinflussen, sodass die Detektion der Betätigung des Griffteils verbessert wird.

Ferner kann im Rahmen der Erfindung vorgesehen sein, dass das Betätigungssensorelement als ein Kurzhub-Sensor ausgeführt ist, sodass die Betätigung des Griffteils im zweiten Bewegungsverlauf als ein Kurzhub detektierbar ist, insbesondere anhand einer Auswertung einer Rotation eines (ersten) Bewegungselements. Die Betätigung des Griffteils wird dabei insbesondere als Kurzhub des Griffteils durchgeführt, sodass lediglich eine geringfügige Bewegung des Griffteils in eine Richtung weg vom beweglichen Teil erfolgt. Der Kurzhub wird bspw. durch eine Krafteinwirkung, insbesondere durch einen Benutzer des Fahrzeuges, bewirkt. Dies hat den Vorteil, dass eine sehr komfortable und einfache Betätigungshandlung erfolgen kann.

Es kann im Rahmen der Erfindung vorgesehen sein, dass die Bewegungsvorrichtung mit einer Antriebsvorrichtung, insbesondere einem Motor, vorzugsweise Stellmotor oder Schrittmotor, verbunden ist und/oder diese aufweist, wobei durch die Antriebsvorrichtung ein erstes Bewegungselement der Bewegungsvorrichtung direkt antreibbar ist, sodass eine Antriebsbewegung der Antriebsvorrichtung an das erste Bewegungselement übertragbar ist, und als eine erste Bewegung im ersten Bewegungsverlauf an das Griffteil übertragbar ist, und indirekt, insbesondere über das Griffteil, an ein zweites Bewegungselement der Bewegungsvorrichtung übertragbar ist. Insbesondere sind hierdurch das erste und zweite Bewegungselement während des ersten Bewegungsverlaufs miteinander gekoppelt. Hierdurch wird eine einfache und komfortable Betätigung des Griffteils ermöglicht, da das Griffteil insbesondere derart weit vom beweglichen Teil wegbewegt wird, dass ein Greifen des Griffteils durch eine Hand des Benutzers möglich ist.

Von weiterem Vorteil kann vorgesehen sein, dass ein erstes Bewegungselement der Bewegungsvorrichtung über ein Übertragungselement mit dem Griffteil in Wirkverbindung bringbar ist, sodass eine erste Bewegung im ersten Bewegungsverlauf von dem ersten Bewegungselement an das Übertragungselement und dann an das Griffteil übertragbar ist, wobei die erste Bewegung im ersten Bewegungsverlauf und eine zweite Bewegung im zweiten Bewegungsverlauf von dem Griffteil an das zweite Bewegungselement übertragbar sind, wobei ein Entkopplungselement vorgesehen ist, um eine Übertragung der zweiten Bewegung des Griffteils an das erste Bewegungselement zu kompensieren und/oder zu verhindern und/oder zu verändern. Insbesondere kann hierdurch die Entkopplung des ersten von dem zweiten Bewegungselement im zweiten Bewegungsverlauf bewirkt werden, um so die Zuverlässigkeit der Detektion des zweiten Bewegungsverlaufs zu erhöhen.

Vorzugsweise kann es möglich sein, dass das Entkopplungselement als (bspw. Druck-) Feder oder Federanordnung (mit mehreren Federn) ausgeführt ist, wobei bevorzugt das Griffteil durch den Druck der Feder beaufschlagt wird, und insbesondere die Feder sowohl am Griffteil als auch am Übertragungselement befestigt ist. Selbstverständlich kann als Entkopplungselement auch ein vergleichbares Mittel zum Einsatz kommen, um bspw. die Bewegung in eine bestimmte Richtung im ersten Bewegungsverlauf zu kompensieren.

Es kann möglich sein, dass das Vergleichssensorelement und/oder das Betätigungssensorelement jeweils als Sensor ausgeführt sind, insbesondere als ein optischer oder resistiver oder induktiver oder mechanischer Sensor oder dergleichen. Insbesondere ist dabei das Vergleichssensorelement und/oder das Betätigungssensorelement (translatorisch) feststehend, insbesondere ortsfest, ausgeführt, und wird somit weder im ersten Bewegungsverlauf noch im zweiten Bewegungsverlauf in Bezug auf die Anordnung in der Griffvorrichtung (translatorisch) bewegt.

Das erste Bewegungselement ist insbesondere als ein aktives Bewegungselement ausgeführt, und überträgt somit aktiv eine Bewegung an das Griffteil. Das zweite Bewegungselement ist vorzugsweise als ein passives Bewegungselement ausgeführt, und überträgt somit bevorzugt keine Bewegung, insbesondere im zweiten Bewegungsverlauf, an das Griffteil.

Es ist ferner denkbar, dass das Griffteil in der Ruhestellung bündig zur Außenseite des beweglichen Teils, insbesondere einer Fahrzeugkarossie und/oder eines Türblechs, angeordnet ist, und in der Betriebsstellung aus der Außenseite des beweglichen Teils vorsprungartig hervorsteht, sodass eine manuelle Betätigung, insbesondere Bewegung, des Griffteils durch einen Benutzer des Fahrzeuges durchführbar ist. Somit kann eine einfache Betätigung des Griffteils, z. B. zum Öffnen des beweglichen Teils, mit einer ausreichenden Kraftausübung zum Öffnen erfolgen.

Es kann möglich sein, dass das Griffteil bei der Bewegung von der Ruhestellung in die (bspw. erste und/oder zweite) Betriebsstellung (und/oder umgekehrt) wenigstens teilweise eine Translationsbewegung und/oder wenigstens teilweise eine Drehbewegung durchführt. Mit anderen Worten kann die Bewegung des Griffteils mehr als eine Bewegungskomponente aufweisen, wobei bspw. die Translationsbewegung gleichzeitig mit der Drehbewegung erfolgt. Die Dreh- und/oder Translationsbewegung wird insbesondere (zumindest teilweise) durch die Bewegungsvorrichtung bewirkt. Vorzugsweise umfasst die Bewegungsvorrichtung wenigstens ein Zapfenelement (bspw. pro Bewegungselement), welches vorzugsweise jeweils in ein Lagerelement, bspw. in ein Drehlager, und/oder jeweils in einem der Sensorelemente geführt ist. Insbesondere ist das Griffteil verschiebbar und/oder drehbar in der Griffvorrichtung, vorzugsweise in der Bewegungsvorrichtung, gelagert. Bspw. sind hierzu die Bewegungsvorrichtung und/oder die einzelnen Bewegungselemente als Drehlager oder dergleichen ausgeführt. Bevorzugt ist das Griffteil als Dreh-, Zieh- oder Schwenkgriff, insbesondere mit einer Lagerachse oder Führungsbahn, ausgeführt. Insbesondere ist das Griffteil an wenigstens einer ersten und/oder zweiten Lagerachse gelagert. Insbesondere ist wenigstens eine der Lagerachsen als eine Drehachse ausgeführt. Vorzugsweise sind das Vergleichssensorelement im Bereich der ersten Lagerachse und/oder das Betätigungssensorelement im Bereich der zweiten Lagerachse angeordnet. Bevorzugt umfasst wenigstens eine der Lagerachsen jeweils wenigstens eines der Bewegungselemente, um die Drehung und/oder Translation zu ermöglichen. Die Lagerachsen können dabei bevorzugt Metall und/oder Kunststoff aufweisen. Bevorzugt umfasst die Lagerachse, insbesondere das Bewegungselement, jeweils ein Magnetelement. Zur Erfassung kann vorzugsweise das jeweilige Magnetelement in Wirkverbindung mit dem Vergleichssensorelement bzw. Betätigungssensorelement stehen, bspw. darin eingetaucht sein. Es können des Weiteren ein oder mehrere Verbindungselemente vorgesehen sein, welche das jeweilige Bewegungselement und/oder ein jeweiliges Zapfenelement so mechanisch mit dem Griffteil verbinden, dass durch eine Bewegung des jeweiligen Bewegungselements (bzw. Zapfenelements) die Dreh- und/oder Translationsbewegung des Griffteils möglich ist.

Es kann des Weiteren optional möglich sein, dass wenigstens eines der Bewegungselemente (insbesondere das erste und/oder zweite Bewegungselement) jeweils wenigstens ein Magnetelement aufweist. Die Bewegungselemente sind jeweils bewegbar, vorzugsweise drehbar, insbesondere als Wellen oder Hebelager oder Achse oder dergleichen, ausgeführt. Vorzugsweise sind die Bewegungselemente jeweils (im Wesentlichen) zylinderförmig und/oder kreiszylinderförmig ausgestaltet, und umfassen vorzugsweise zwei axiale Enden. Wenigstens eines der Bewegungselemente kann dabei, vorzugsweise an einem der jeweiligen axialen Enden, jeweils ein Magnetelement umfassen. Das jeweilige Magnetelement umfasst dabei bspw. eine Nord-Süd-Polung, sodass zuverlässig eine Bewegung, insbesondere Rotation, des jeweiligen Bewegungselements anhand einer Veränderung des magnetischen Feldes erfasst werden kann. Vorzugsweise sind zur Erfassung des Magnetfeldes die Sensorelemente, bspw. als Hall-Sensoren, in unmittelbarer Nähe bzw. benachbart zum Magnetelement angeordnet. Die Sensorelemente umfassen dabei bspw. das Vergleichssensorelement (bspw. im Bereich eines ersten Magnetelements eines ersten Bewegungselements) und das Betätigungssensorelement (bspw. im Bereich eines zweiten Magnetelements eines zweiten Bewegungselements).

Es kann außerdem möglich sein, dass anhand der Erfassung der jeweiligen Bewegungen der Bewegungselemente ein Bewegungsverlauf des Griffteils ermittelt wird. Vorzugsweise wird eine erste Erfassung einer ersten Bewegung des ersten Bewegungselements und eine zweite Erfassung einer zweiten Bewegung des zweiten Bewegungselements durchgeführt. Bevorzugt umfasst der Bewegungsverlauf des Griffteils unterschiedliche Bewegungsphasen, welche besonders bevorzugt anhand einer qualitativen und/oder quantitativen Auswertung der jeweiligen Erfassungen und/oder anhand eines Vergleichs der jeweiligen Erfassungen miteinander bestimmt und unterschieden werden können.

Insbesondere kann es möglich sein, dass das Sensorelement, insbesondere das Betätigungssensorelement und/oder das Vergleichssensorelement, dazu ausgeführt sind, eine kontaktlose Erfassung, insbesondere Messung, und/oder eine Drehwinkelmessung und/oder eine stufenlose Erfassung einer Position, insbesondere wenigstens einer der (ersten und/oder zweiten) Bewegungselemente, durchzuführen. Alternativ oder zusätzlich kann es durch die Erfassung möglich sein, verschiedene Positionen, insbesondere Drehwinkel-Positionen, insbesondere des ersten und/oder zweiten Bewegungselements zu erfassen. Mit anderen Worten kann es möglich sein, dass durch die Erfassung nicht nur die Endpositionen, sondern auch Zwischenpositionen wenigstens einer der Bewegungselemente erfasst werden. Die Position können bspw. stufenlos erfasst werden, oder es können zumindest vier oder sechs oder 10 oder 20 oder 30 Positionen für ein jeweiliges Bewegungselement unterschieden werden. Insbesondere kann die Position wenigstens einer der Bewegungselemente mit einer Auflösung von mindestens 5° oder mindestens 2° oder mindestens 1° oder mindestens 0,1 ° durch wenigstens eines der Sensorelemente erfasst werden. Damit wird der Vorteil erzielt, dass eine besonders genaue und differenzierte Erfassung möglich ist, sodass bspw. auch Fehlerzustände oder mechanischer Verschleiß oder dergleichen zuverlässig erkannt werden kann. Die kontaktlose Erfassung ermöglicht es ferner, den Verschleiß bei der Erfassung zu reduzieren.

Insbesondere kann es möglich sein, dass ein Entkopplungselement vorgesehen ist, um die Übertragung der Bewegung des Griffteils auf das erste Bewegungselement im zweiten Bewegungsverlauf zu verändern, insbesondere zu kompensieren, und insbesondere im Vergleich mit der Übertragung der Bewegung des Griffteils auf das zweite Bewegungselement abzuändern. Dies ermöglicht eine eindeutige Auswertung der ersten und zweiten Erfassung zur Detektion der Betätigung des Griffteils.

Nach einer weiteren Möglichkeit kann vorgesehen sein, dass die Bewegungselemente als translatorisch feststehende Teile der Griffvorrichtung ausgeführt sind, sodass eine translatorische Bewegung der Bewegungselemente durch die Bewegung des Griffteils verhindert ist und/oder ein Abstand zwischen den Bewegungselementen und dem Griffteil proportional zu einem Bewegungsverlauf des Griffteils im ersten Bewegungsverlauf und/oder im zweiten Bewegungsverlauf erhöht wird. Insbesondere kann der Abstand zwischen den Bewegungselementen zueinander und/oder zu einem Montageträger der Griffvorrichtung und/oder zu der Außenseite des beweglichen Teils im Wesentlichen konstant sein und/oder während des ersten und zweiten Bewegungsverlaufs konstant bleiben.

Es kann außerdem möglich sein, dass im zweiten Bewegungsverlauf eine manuelle Bedienung und/oder Bewegung des Griffteils durchführbar ist, und insbesondere im ersten Bewegungsverlauf eine Bewegung des Griffteils ausschließlich automatisiert erfolgt, insbesondere durch die Bewegungsvorrichtung und/oder die Antriebsvorrichtung, vorzugsweise gesteuert und/oder geregelt. Insbesondere ist dabei die manuelle Betätigung in der Ruhestellung verhindert, so dass ein versehentliches Auslösen der Betätigung zuverlässig vermieden werden kann.

Alternativ oder zusätzlich ist es denkbar, dass das Griffteil in die Ruhestellung und in zumindest eine Betriebsstellung, insbesondere Offenstellung und/oder Ausstellung, bewegbar ist, wobei insbesondere das Griffteil in der zumindest einen Betriebsstellung, insbesondere einer ersten Offenstellung (ersten Ausstellung), zum Öffnen des beweglichen Teils bedienbar ist, und insbesondere bei der Bewegung in eine zweite Offenstellung (zweite Ausstellung) eine Betätigung einer Schließvorrichtung bewirkt. Die Bewegung in die zweite Offenstellung wird dabei insbesondere durch die Betätigung des Griffteils, insbesondere eines Kurzhubes, bewirkt. Ferner kann es möglich sein, dass das Griffteil in der Ruhestellung bündig zur Außenfläche des beweglichen Teils angeordnet ist, und in der (ersten und/oder zweiten) Offenstellung von der Außenfläche hervorragt und/oder zum Öffnen des beweglichen Teils bedienbar ist.

Des Weiteren ist es im Rahmen der Erfindung denkbar, dass eine erste Bewegung des Griffteils von der Ruhestellung in die (erste) Offenstellung im ersten Bewegungsverlauf erfolgt, und insbesondere durch die Antriebsvorrichtung durchführbar ist, und insbesondere eine zweite Bewegung des Griffteils von der (ersten) Offenstellung in eine zweite oder weitere Offenstellung im zweiten Bewegungsverlauf erfolgt und insbesondere manuell durch einen Bediener zum Öffnen des beweglichen Teils erfolgt. Dabei kann es möglich sein, dass in der Ruhestellung und/oder im ersten Bewegungsverlauf eine Bedienung des Griffteils zum Öffnen des beweglichen Teils verhindert ist, um eine versehentliche Betätigung zu verhindern.

Ferner ist es optional möglich, dass eine Sperreinheit zur Arretierung des Griffteils vorgesehen ist, um die Überführung des Griffteils in den ersten und/oder zweiten Bewegungsverlauf zu verhindern, indem die Sperreinheit form- und/oder kraftschlüssig in das Griffteil eingreift und/oder das Griffteil hält, sodass vorzugsweise eine erste und/oder zweite Bewegung verhindert ist, wobei vorzugsweise die Sperreinheit das Griffteil während des ersten und/oder zweiten Bewegungsverlaufs beweglich freigibt. Somit kann eine versehentliche Betätigung, insbesondere während der Fahrt, vermieden werden.

Weiterhin kann es möglich sein, dass im beweglichen Teil, insbesondere einer Tür, insbesondere in einem Türblech, eine Öffnung für die Griffvorrichtung vorgesehen ist, die im Wesentlichen durch eine Griffschale verschlossen ist, und wobei insbesondere die Griffschale zusammen mit einer Griffhalterung und/oder einem Trägerelement die Griffvorrichtung form- und/oder kraftschlüssig in der Öffnung am Türblech hält. Insbesondere ist dabei denkbar, dass das - insbesondere feststehende - wenigstens eine Bewegungselement und/oder das Vergleichssensorelement und/oder das Betätigungssensorelement derart in der Griffvorrichtung angeordnet und/oder befestigt und/oder drehbar gelagert sind, dass ein Abstand zwischen dem Bewegungselement bzw. dem Vergleichssensorelement bzw. dem Betätigungssensorelement und der Griffschale und/oder Griffhalterung bei dem ersten und zweiten Bewegungsverlauf konstant bleibt. Hierdurch wird die Zuverlässigkeit und Fehleranfälligkeit für die Detektion verbessert.

Des Weiteren kann es im Rahmen der Erfindung vorteilhaft sein, wenn bei einer Betätigung des Griffteils ein elektrisches Signal erzeugbar ist, wodurch insbesondere ein Sicherheitssystem oder eine Komfortelektronik des Fahrzeuges einschaltbar ist.

Vorteilhafterweise kann es möglich sein, dass das Griffteil derart federbelastet ist, insbesondere durch das Entkopplungselement oder ein weiteres Federelement, dass das Griffteil immer in seine Ruhestellung gedrückt wird, wobei vorzugsweise die Bewegungsvorrichtung gegen die Federkraft wirkt. Alternativ oder zusätzlich kann es möglich sein, dass das Griffteil derart federbelastet ist, dass die Federkraft gegen die zweite Bewegung (im zweiten Bewegungsverlauf) des Griffteils wirkt, sodass das Griffteil bei der zweiten Bewegung durch die Feder(kraft) in Richtung der (ersten) Betriebsstellung bzw. Offenstellung und/oder Ruhestellung gedrückt wird. Dadurch wird der Komfort bei der Bedienung deutlich erhöht.

Ebenfalls Gegenstand der Erfindung ist ein Verfahren zur Detektion einer Betätigung einer Griffvorrichtung für ein bewegliches Teil eines Fahrzeuges, insbesondere zum Öffnen des beweglichen Teils, insbesondere einer Tür oder Heckklappe oder dergleichen, mit einem beweglich gelagerten Griffteil und einer Bewegungsvorrichtung.

Die Betätigung ist bspw. in der Betriebsstellung freigegeben, und umfasst insbesondere eine (manuelle) Kraftausübung am Griffteil, vorzugsweise ein manuelles Drücken oder Ziehen oder dergleichen am Griffteil.

Hierbei ist bevorzugt vorgesehen, dass durch wenigstens einen ersten Bewegungsverlauf der Bewegungsvorrichtung das Griffteil von einer Ruhestellung in eine Betriebsstellung (Offenstellung) bewegt wird, und das Griffteil in der Betriebsstellung zur (insbesondere manuellen) Betätigung freigegeben ist, sodass bei dieser (insbesondere manuellen) Betätigung wenigstens ein zweiter Bewegungsverlauf der Bewegungsvorrichtung erfolgt, um vorzugsweise das bewegliche Teil zu öffnen.

Bevorzugt können im Rahmen des erfindungsgemäßen Verfahrens die nachfolgenden Schritte vorgesehen sein, welche insbesondere nacheinander oder in beliebiger Reihenfolge durchgeführt werden, wobei vorzugsweise einzelne Schritte auch wiederholt durchgeführt werden können:
- Durchführen wenigstens einer ersten Erfassung durch wenigstens ein Vergleichssensorelement zur Bestimmung eines ersten Erfassungsergebnisses, insbesondere eines ersten Erfassungsergebnisverlaufs,
- Durchführen wenigstens einer zweiten Erfassung durch wenigstens ein Betätigungssensorelement zur Bestimmung eines zweiten Erfassungsergebnisses, insbesondere eines zweiten Erfassungsergebnisverlaufs,
- Vergleichen des ersten Erfassungsergebnisses mit dem zweiten Erfassungsergebnis zur Bestimmung eines Vergleichsergebnisses (insbesondere durch eine Auswertevorrichtung), sodass anhand des Vergleichs und/oder des Vergleichsergebnisses der zweite Bewegungsverlauf detektiert wird, um die Betätigung des Griffteils zu detektieren, und bevorzugt der erste Bewegungsverlauf von dem zweiten Bewegungsverlauf unterschieden wird, sodass vorzugsweise anhand der Auswertung auch der erste Bewegungsverlauf detektiert wird.

Mit anderen Worten wird der Vergleich, insbesondere der Unterschied bei der ersten und zweiten Erfassung, genutzt, um den ersten Bewegungsverlauf von dem zweiten Bewegungsverlauf zu unterscheiden und/oder das Vorliegen des zweiten Bewegungsverlaufs zu erkennen, und damit die Betätigung des Griffteils zu detektieren. Bei einer Detektion des zweiten Bewegungsverlaufs kann somit darauf geschlossen werden, dass eine Betätigung des Griffteils vorliegt, da insbesondere der zweite Bewegungsverlauf durch die Betätigung des Griffteils, insbesondere durch die Bewegung des Griffteils hierbei, initiiert und/oder bewirkt wird. Insbesondere wirkt sich hierzu einer der beiden Bewegungsverläufe unterschiedlich auf das erste und zweite Bewegungselement bzw. auf die erste und zweite Erfassung aus. Der Unterschied bei der ersten Erfassung und zweiten Erfassung wird bspw. durch einen Vergleich eines ersten Erfassungswertverlaufs, welcher anhand der ersten Erfassung ermittelt wird, und eines zweiten Erfassungswertverlaufs, welcher bei der zweiten Erfassung ermittelt wird, ermöglicht.

Damit bringt das erfindungsgemäße Verfahren die gleichen Vorteile mit sich, wie sie ausführlich mit Bezug auf ein erfindungsgemäßes Erfassungssystem und/oder eine erfindungsgemäße Griffvorrichtung beschrieben worden sind. Zudem kann das Verfahren geeignet sein, ein erfindungsgemäßes Erfassungssystem und/oder eine erfindungsgemäße Griffvorrichtung zu betreiben.

Bevorzugt wird die erste und zweite Erfassung derart durchgeführt, dass nicht nur anhand der ersten Erfassung oder nur anhand der zweiten Erfassung der erste von dem zweiten Bewegungsverlauf unterschieden werden kann, sondern insbesondere nur anhand des Vergleichsergebnisses der erste vom zweiten Bewegungsverlauf zu unterscheiden ist. Mit anderen Worten kann es möglich sein, dass ausschließlich das Vergleichsergebnis signifikant für den ersten und zweiten Bewegungsverlauf ist. Dies ist insbesondere der Fall, wenn die Auswertung anhand der zweiten (oder ersten) Erfassung alleine keine Aussage ermöglicht, ob ein erster oder zweiter Bewegungsverlauf vorliegt (z. B. wenn sich das zweite Bewegungselement gleichartig sowohl bei dem ersten als auch dem zweiten Bewegungsverlauf bewegt). Alternativ kann es auch möglich sein, dass ausschließlich die zweite Erfassung signifikant für den zweiten Bewegungsverlauf ist (wenn insbesondere das zweite Bewegungselement sich unterschiedlich für den ersten und zweiten Bewegungsverlauf bewegt).

Insbesondere ist es vorgesehen, dass das Vergleichssensorelement und das Betätigungssensorelement an der Bewegungsvorrichtung angeordnet sind, sodass der erste Bewegungsverlauf durch die erste Erfassung des Vergleichssensorelements und die zweite Erfassung des Betätigungssensorelements auswertbar ist, und der zweite Bewegungsverlauf, insbesondere nur, durch die zweite Erfassung des Betätigungssensorelements auswertbar ist, wodurch die Betätigung des Griffteils detektiert wird.

Insbesondere wird die manuelle Betätigung als ein Ziehen am Griffteil durch einen Benutzer des Fahrzeuges durchgeführt. Dies ermöglicht eine besonders komfortable Betätigung, welche in eine Öffnungsbewegung zum Öffnen des beweglichen Teils übergehen kann.

Ferner ist es optional vorgesehen, dass die Bewegungsvorrichtung ein erstes Bewegungselement und ein zweites Bewegungselement umfasst, welche im ersten Bewegungsverlauf in einer ersten Bewegungsart, insbesondere gleichartig, und im zweiten Bewegungsverlauf in einer zweiten Bewegungsart, insbesondere unterschiedlich, bewegt werden, sodass der Unterschied der Bewegung (insbesondere der Unterschied der Bewegungsart) für die Betätigung des Griffteils spezifisch ist, und insbesondere bei dem Vergleichen ausgewertet wird. Dabei ist es auch denkbar, dass im ersten Bewegungsverlauf die Bewegung des ersten Bewegungselementes mit einem anderen Drehwinkel und/oder absoluten Drehwinkel erfolgt als die Bewegung des zweiten Bewegungselementes und dennoch die Bewegung und/oder die Erfassung dieser Bewegung gleichartig erfolgt, da sowohl die Bewegung des ersten Bewegungselementes als auch die Bewegung des zweiten Bewegungselementes spezifisch für den ersten Bewegungsverlauf ist.

Es kann insbesondere vorgesehen sein, dass das erste Bewegungselement nur bei einer ersten Bewegung des Griffteils im ersten Bewegungsverlauf sich (signifikant) bewegt, und das zweite Bewegungselement sich sowohl bei der ersten Bewegung als auch bei einer zweiten Bewegung des Griffteils im zweiten Bewegungsverlauf sich (signifikant) bewegt.

Ferner kann es im Rahmen der Erfindung vorgesehen sein, dass das Griffteil in der Betriebsstellung zur Durchführung der, insbesondere manuellen, Betätigung zum Öffnen des beweglichen Teils, insbesondere ein Drücken oder Ziehen am Griffteil, und vorzugsweise zur Durchführung wenigstens einer weiteren, insbesondere manuellen, Betätigung, insbesondere ein Drücken und/oder Ziehen am Griffteil, freigegeben ist, sodass insbesondere bei der weiteren Betätigung wenigstens ein weiterer Bewegungsverlauf der Bewegungsvorrichtung erfolgt, wobei bevorzugt die Bewegungsvorrichtung ein erstes Bewegungselement und ein zweites Bewegungselement umfasst, welche (insbesondere sowohl im ersten als auch) im weiteren Bewegungsverlauf in einer ersten (oder weiteren) Bewegungsart, insbesondere derart gleichartig, bewegt werden, dass die Betätigung zum Öffnen von der mindestens einen weiteren Betätigung anhand des Vergleichsergebnisses unterschieden wird. Entsprechend kann somit auch zuverlässig die weitere Betätigung, d. h. die Überführung des Griffteils in die Ruhestellung, erkannt werden.

Es kann weiter möglich sein, dass im ersten Bewegungsverlauf das Griffteil gegenüber dem beweglichen Teil in eine erste Ausstellung (erste Offenstellung) gebracht wird, insbesondere mit einem Abstand zu einer Außenfläche des beweglichen Teils von mindestens 1 cm oder mindestens 2 cm oder mindestens 4 cm oder mindestens 6 cm, wobei vorzugsweise dann die Betätigung zum Öffnen des beweglichen Teils dadurch erfolgt, dass das Griffteil im zweiten Bewegungsverlauf manuell durch einen Benutzer des Fahrzeuges in eine zweite Ausstellung (zweite Offenstellung) gebracht wird, insbesondere durch einen Kurzhub, wodurch eine Erhöhung des Abstands zur Außenfläche des beweglichen Teils bewirkt wird, bevorzugt im Bereich von 1 mm bis 10 mm, besonders bevorzugt 2 mm bis 3 mm, wobei bevorzugt die Erhöhung anhand des Vergleichsergebnisses detektiert wird und insbesondere die erste Ausstellung von der zweiten Ausstellung unterschieden wird. Hierdurch ist eine einfache Betätigung zum Öffnen des beweglichen Teils möglich.

Insbesondere ist es möglich, dass aus der Betriebsstellung (z. B. ersten Offenstellung) heraus ein Drücken durch den Benutzer am Griffteil in Richtung des beweglichen Teils eine Bewegung, insbesondere Rotation, beider Bewegungselemente bewirkt und/oder eine Erfassung einer Bewegung sowohl durch das Betätigungssensorelement als auch durch das Vergleichssensorelement erfolgt. Hierdurch kann insbesondere ein erster Bewegungsverlauf oder weiterer Bewegungsverlauf zur Überführung in die Ruhestellung zuverlässig erfasst werden.

Vorteilhaft ist es zudem, wenn der zweite Bewegungsverlauf dann detektiert wird, wenn
- das Betätigungssensorelement eine erforderliche Ausstellung des Griffteils im Bereich von 1 mm bis 10 mm, bevorzugt 2 mm bis 3 mm erfasst, insbesondere anhand der (insbesondere zweiten) Erfassung einer erforderlichen Rotation eines zweiten Bewegungselements im Bereich von 1° bis 10°, vorzugsweise 2° bis 3°, und zudem
- eine derartige Erfassung beim Vergleichssensorelement ausbleibt, vorzugsweise anhand der (insbesondere ersten) Erfassung einer Rotation eines ersten Bewegungselements, welche bevorzugt maximal 1° bis 2° betragen darf.
Mit anderen Worten wird der zweite Bewegungsverlauf dann detektiert, wenn die erste Erfassung unspezifisch ist und/oder die zweite Erfassung spezifisch für den zweiten Bewegungsverlauf ist. Insbesondere wird somit ein Unterschied der Rotation des ersten Bewegungselementes und der Rotation des zweiten Bewegungselementes zur Detektion des zweiten Bewegungsverlaufs herangezogen. Dies ermöglicht auch, dass eine automatische "Ausrichtung" des Betätigungssensorelementes dadurch erfolgen kann, dass nach der vollständigen Durchführung des ersten Bewegungsverlaufs eine Absolutposition gemessen wird und/oder die erste Erfassung mit der zweiten Erfassung verglichen wird. Hierdurch können bspw. Fertigungstoleranzen und/oder altersbedingte Änderungen bei den Bewegungselementen und/oder bei dem Betätigungssensorelement und/oder bei dem Vergleichssensorelement und/oder bei weiteren Elementen der Griffvorrichtung kompensiert werden.

Es kann ferner möglich sein, dass der erste Bewegungsverlauf, insbesondere eine anhand der ersten und zweiten Erfassung ermittelte Position des Griffteils in der Betriebsstellung, bei dem Vergleichen, und/oder Auswerten des Vergleichsergebnisses, als Referenz für die Detektion der Betätigung des Griffteils genutzt wird, vorzugsweise zur Kalibrierung und/oder Konfiguration eines Startwertes zur Bestimmung der erforderlichen Ausstellung des Griffteils und/oder der erforderlichen Rotation, ab welcher die Betätigung detektiert wird. Auch hierdurch können Toleranzen und altersbedingte Effekte kompensiert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
- Fig. 1: eine schematische Ansicht von Teilen eines erfindungsgemäßen Erfassungssystems sowie einer erfindungsgemäßen Griffvorrichtung,
- Fig. 2: eine weitere schematische Darstellung von Teilen einer erfindungsgemäßen Griffvorrichtung sowie eines erfindungsgemäßen Erfassungssystems,
- Fig. 3: eine weitere schematische Darstellung von Teilen eines erfindungsgemäßen Erfassungssystems sowie einer erfindungsgemäßen Griffvorrichtung,
- Fig. 4: eine schematische Darstellung von Teilen einer erfindungsgemäßen Griffvorrichtung,
- Fig. 5: eine schematische Seitenansicht auf ein Fahrzeug und
- Fig. 6: eine schematische Darstellung zur Visualisierung eines erfindungsgemäßen Verfahrens.
- Fig. 7: eine schematische Darstellung von Teilen einer erfindungsgemäßen Griffvorrichtung,
- Fig. 8: eine weitere schematische Darstellung von Teilen einer erfindungsgemäßen Griffvorrichtung, und
- Fig. 9 bis 11: schematische Darstellungen von Bewegungselementen.

In den nachfolgenden Figuren werden für die gleichen technischen Merkmale auch von unterschiedlichen Ausführungsbeispielen die identischen Bezugszeichen verwendet.

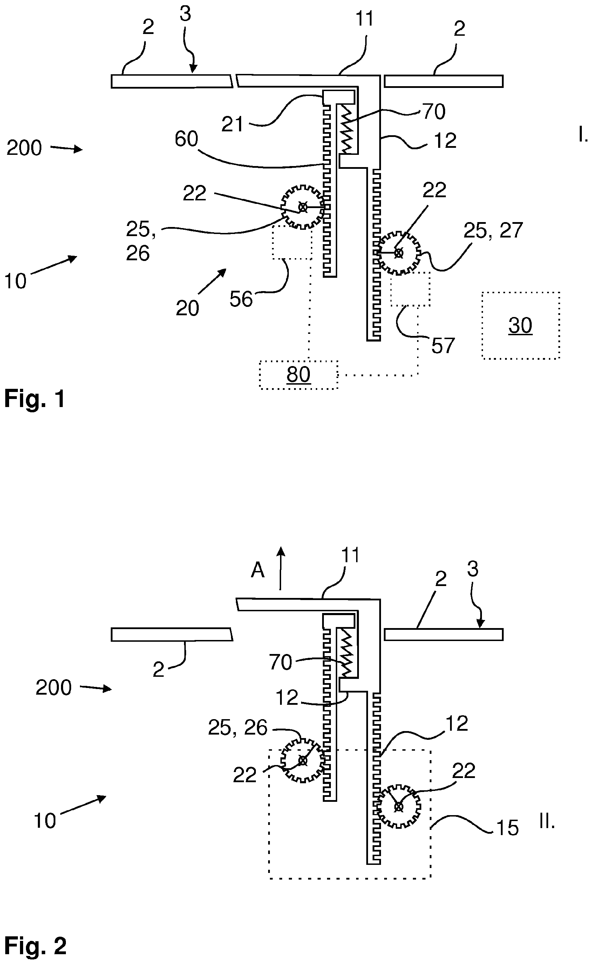

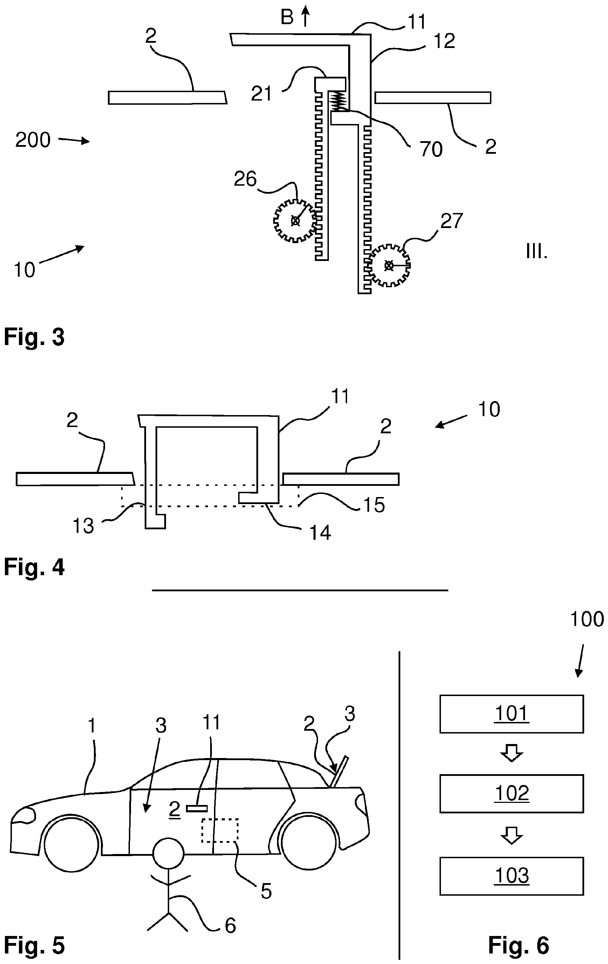

In den Figuren 1 bis 3 sind schematisch Teile einer erfindungsgemäßen Griffvorrichtung 10 mit einem erfindungsgemäßen Erfassungssystem 200 gezeigt. Dabei ist in Figur 1 eine Ruhestellung I, in Figur 2 eine Betriebsstellung II bzw. erste Ausstellung II und in Figur 3 eine zweite Ausstellung III eines Griffteils 11 der Griffvorrichtung 10 gezeigt. Weiter ist erkennbar, dass in der Ruhestellung I das Griffteil 11 bündig zu einer Außenfläche 3 eines beweglichen Teils 2 eines Fahrzeuges 1 ist. In der Ruhestellung I ist damit keine Betätigung des Griffteils 11 durch einen Benutzer 6 möglich.

Erst durch einen ersten Bewegungsverlauf A einer Bewegungsvorrichtung 20 wird das Griffteil 11 von der Ruhestellung I in die Betriebsstellung II bewegt, sodass das Griffteil 11 manuell betätigbar ist. Dieser Vorgang, insbesondere die Auslösung des ersten Bewegungsverlaufs A, kann z. B. bei der Erfassung einer Annäherung des Benutzers 6 an das Fahrzeug 1 initiiert werden. In den Figuren sind die Bewegungsverläufe A, B nur rein schematisch durch einen Pfeil repräsentiert.

Damit durch den ersten Bewegungsverlauf A das Griffteil 11 bewegt werden kann, umfasst die Bewegungsvorrichtung 20 zumindest ein Bewegungselement 25. So kann bspw. ein erstes Bewegungselement 26, insbesondere als ein aktives Bewegungselement 26, mittelbar oder unmittelbar mit einer Antriebsvorrichtung 30 verbunden sein. Hierdurch kann eine Bewegung der Antriebsvorrichtung 30 an das erste Bewegungselement 26 übertragen werden, welches hierdurch bspw. in eine Rotation überführt wird. Entsprechend können die Bewegungselemente 25 bspw. als Rad oder Welle oder Achse oder Hebelager ausgeführt sein, welche rotierbar in der Griffvorrichtung 10 gelagert sind. Die Bewegung des ersten Bewegungselementes 26 kann dann an ein Übertragungselement 60 übertragen werden, wobei das Übertragungselement 60 hierdurch bspw. in eine translatorische Bewegung überführt wird. Die Bewegung kann selbstverständlich auch andersartig sein, und z. B. auch eine Drehbewegung oder dergleichen umfassen. Das Übertragungselement 60 kann zudem einen Betätigungsbereich 21 aufweisen, welches in direkter Wirkverbindung mit dem Griffteil 11 steht. Mit dem Betätigungsbereich 21 drückt dann das Übertragungselement 60 gegen das Griffteil 11, sodass das Griffteil 11 in Richtung des Pfeils A von der Ruhestellung I in die Betriebsstellung bzw. erste Ausstellung II bewegt wird.

Des Weiteren steht das Griffteil 11 über ein Griffübertragungselement 12 mit einem zweiten Bewegungselement 27, insbesondere einem passiven Bewegungselement 27, in Wirkverbindung. Die Bewegungselemente 25 sind dabei bspw. an einer feststehenden Achse 22 angeordnet und/oder drehbar gelagert, sodass die translatorische Bewegung des Griffteils 11 nicht zu einer translatorischen Bewegung der Bewegungselemente 25 führt. Insbesondere führt die Bewegung des Griffteils 11 ausschließlich zu einer rotatorischen Bewegung der Bewegungselemente 25. Auf diese Weise haben störende Einwirkungen am Griffteil 11, welche nicht zu einer Betätigung dienen, keine störende Auswirkung auf die Bewegung der Bewegungselemente 25. Fehlereinflüsse können damit kompensiert werden.

Wie insbesondere auch aus Figur 4 deutlich wird, können die Bewegungselemente an einem Trägerelement 15, insbesondere Montageträger 15, der Griffvorrichtung 10 angeordnet sein. Bevorzugt kann es dabei auch möglich sein, dass ein erstes Bewegungselement 26 an einem ersten Steg 13 und ein zweites Bewegungselement 27 an einem zweiten Steg 14 angeordnet ist.

Anhand der Figuren 1 bis 3 ist erkennbar, dass die Bewegung der Bewegungselemente 25 in einem ersten Bewegungsverlauf A gleichartig und in einem zweiten Bewegungsverlauf B unterschiedlich erfolgt. Diese unterschiedliche Übertragung der Bewegung des Griffteils 11 im zweiten Bewegungsverlauf B ermöglicht dabei eine besonders zuverlässige und eindeutige Detektion der Betätigung des Griffteils 11. Diese Betätigung dient dann insbesondere zur Aktivierung und/oder Ansteuerung einer Schließvorrichtung 5.

Das Griffteil 11 kann in der Betriebsstellung II, insbesondere eine erste Ausstellung II, dadurch betätigt werden, dass ein Kurzhub in Richtung des Pfeils B am Griffteil 11 ausgeübt wird. Hierzu zieht ein Benutzer 6 bspw. am Griffteil 11 in die Richtung weg vom beweglichen Teil 2, wie durch den Pfeil B gezeigt ist. Hierdurch wird das Griffteil 11 in eine zweite Ausstellung III überführt (s. Fig. 3).

Dieser zweite Bewegungsverlauf B, d. h. insbesondere die Überführung des Griffteils 11 von der Betriebsstellung II in die zweite Ausstellung III, wird aufgrund eines Entkopplungselement 70 (vorrangig) nur an das zweite Bewegungselement 27 übertragen. Mit anderen Worten erfolgt beim zweiten Bewegungsverlauf B eine andere Übertragung der Bewegung zwischen dem Griffteil 11 und den Bewegungselementen 25 als bei dem ersten Bewegungsverlauf A. Das Entkopplungselement 70 ist hierzu insbesondere als eine Feder ausgeführt, welche die Bewegungsenergie des Griffteils 11 von der Bewegung von der Betriebsstellung II in die zweite Ausstellung III aufnehmen kann.

In Figur 5 ist gezeigt, dass das Griffteil 11 zum Öffnen eines beweglichen Teils 2 ausgeführt sein kann. Insbesondere kann das bewegliche Teil 2 als eine Tür und/oder als eine Heckklappe des Fahrzeugs 1 ausgebildet sein. Selbstverständlich kann daher das Griffteil 11 auch an der Heckklappe oder an einem sonstigen Teil des Fahrzeugs 1 angeordnet sein.

Gemäß Figur 6 wird schematisch ein erfindungsgemäßes Verfahren 100 visualisiert. Gemäß einem ersten Verfahrensschritt 101 wird dabei eine erste Erfassung durch wenigstens ein Vergleichssensorelement 56 zur Bestimmung eines ersten Erfassungsergebnisses durchgeführt. Gemäß einem zweiten Verfahrensschritt 102 wird eine zweite Erfassung durch wenigstens ein Betätigungssensorelement 57 zur Bestimmung eines zweiten Erfassungsergebnisses durchgeführt. Gemäß einem dritten Verfahrensschritt 103 wird ein Vergleich des ersten Erfassungsergebnisses mit dem zweiten Erfassungsergebnis zur Bestimmung eines Vergleichsergebnisses durchgeführt, sodass anhand des Vergleichs der zweite Bewegungsverlauf B detektiert werden kann, um die Betätigung des Griffteils 11 zu detektieren.

Wie in Figur 1 zu sehen ist, kann dabei das Vergleichssensorelement 56 im Bereich des ersten Bewegungselementes 26 und das Betätigungssensorelement 57 im Bereich des zweiten Bewegungselementes 27 angeordnet sein. Die erste und zweite Erfassung kann dabei bspw. durch eine Auswertevorrichtung 80 ausgewertet werden.

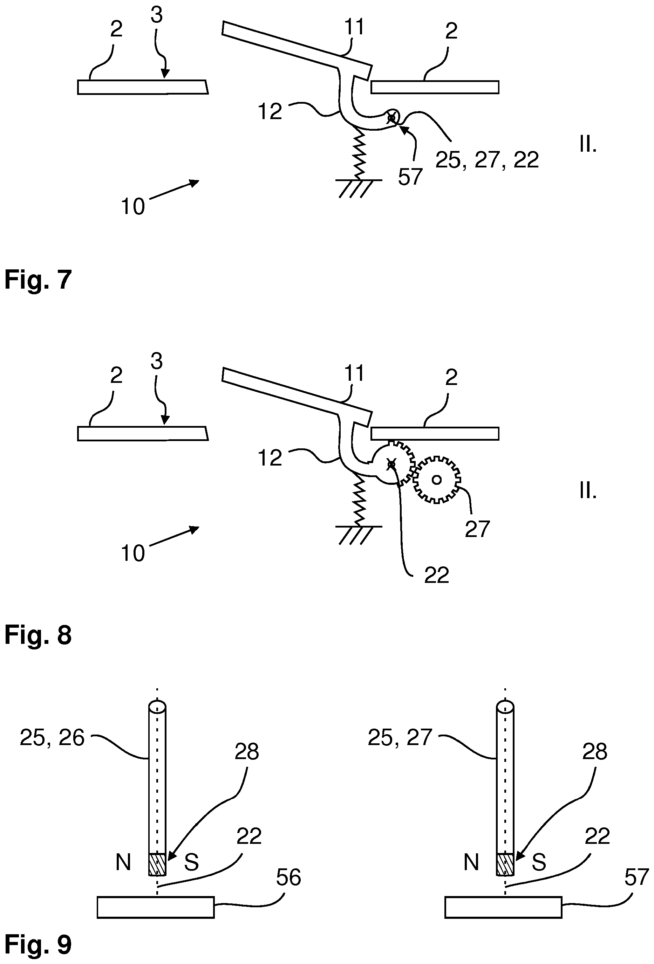

In Figur 7 und 8 sind schematisch Teile einer erfindungsgemäßen Griffvorrichtung 10 gezeigt. Dabei ist zu sehen, dass das Griffteil 11 als ein Drehgriff bzw. Ziehgriff 11 ausgeführt ist, welcher drehbar um eine Drehachse 22 gelagert ist. Entsprechend kann es bei der Bewegung von der Ruhestellung I in die Betriebsstellung II und/oder bei der Bewegung von der (ersten Ausstellung II bzw.) Betriebsstellung II in die zweite Ausstellung III bzw. bei der Betätigung möglich sein, dass das Griffteil 11 eine Drehbewegung oder eine Translationsbewegung zusammen mit einer Drehbewegung (Schwenkbewegung) durchführt. Diese Bewegung wird bspw. durch die Bewegungsvorrichtung 20 bewirkt.

Des Weiteren kann es gemäß Figur 7 möglich sein, dass ein Bewegungselement 25 bzw. das zweite Bewegungselement 27 in der Drehachse 22 integriert ist. Im Bereich oder an der Drehachse 22, insbesondere einer Lagerachse, kann vorzugsweise ein Magnetelement 28 angebracht sein. Insbesondere ist das Magnetelement 28 an einem (bspw. ersten oder zweiten) Bewegungselement 25 angeordnet. Das Magnetelement 28 kann bspw. dazu dienen, von dem Betätigungssensorelement 57 erfasst zu werden. Das Betätigungssensorelement 57 kann dabei ebenfalls in der Drehachse 22 integriert sein und/oder im Bereich der Drehachse 22 angeordnet sein, vorzugsweise in einem magnetischen Feld des Magnetelements 28. Selbstverständlich kann auch ein in Figur 7 nicht explizit gezeigtes erstes Bewegungselement 26 vorgesehen sein, und gleichartig oder unterschiedlich zum zweiten Bewegungselement 27 ausgebildet sein. Wie in den Figuren 1 bis 3 gezeigt, kann des Weiteren auch eine Antriebsvorrichtung 30 und/oder ein Übertragungselement 60 und/oder ein Entkopplungselement 70 vorgesehen sein, um eine Bewegung des Griffteils 11 von einer Ruhestellung I in eine Betriebsstellung II zu bewirken. Selbstverständlich kann es auch möglich sein, dass ausschließlich eine Betriebsstellung II als Ausgangsstellung vorgesehen ist, und damit die Bewegung aus der Ruhestellung I, und entsprechend die Antriebsvorrichtung 30 und/oder das Übertragungselement 60 und/oder das Entkopplungselement 70, nicht vorgesehen ist.

In Figur 8 ist eine weitere Möglichkeit zur Ausgestaltung der erfindungsgemäßen Griffvorrichtung 10 gezeigt. Dabei ist zu sehen, dass ein zweites Bewegungselement 27 im Bereich der Drehachse 22 angeordnet sein kann. Insbesondere steht dabei das zweite Bewegungselement 27 derart in Wirkverbindung mit einem Griffübertragungselement 12, dass zumindest eine Drehbewegung des Griffteils 11 an das zweite Bewegungselement 27 übertragen wird. Hierzu ist das zweite Bewegungselement 27 und/oder das Griffübertragungselement 12 zumindest teilweise und/oder zumindest bereichsweise als Getriebeelement ausgebildet.

Figur 9 zeigt schematisch ein erstes Bewegungselement 26 und ein zweites Bewegungselement 27. Selbstverständlich können auch weitere Bewegungselemente 25 vorgesehen sein, welche derart oder ähnlich ausgebildet sind. Die Bewegungselemente 25 sind z. B. zylinderförmig ausgeführt und/oder umfassen jeweils ein Magnetelement 28, welches vorzugsweise eine Nord (N) und Süd (S) - Polung aufweist (schematisch dargestellt). Somit kann ein magnetisches Feld erzeugt werden, welches für eine Bewegung des jeweiligen Bewegungselements 25 spezifisch ist. Ein Sensorelement (d. h. ein Vergleichssensorelement 56 bzw. ein Betätigungssensorelement 57) können dabei im magnetischen Feld angeordnet sein, um die Drehung der Bewegungselemente 25 durch eine Drehung der Magnetelemente 28, insbesondere stufenlos zu erfassen.

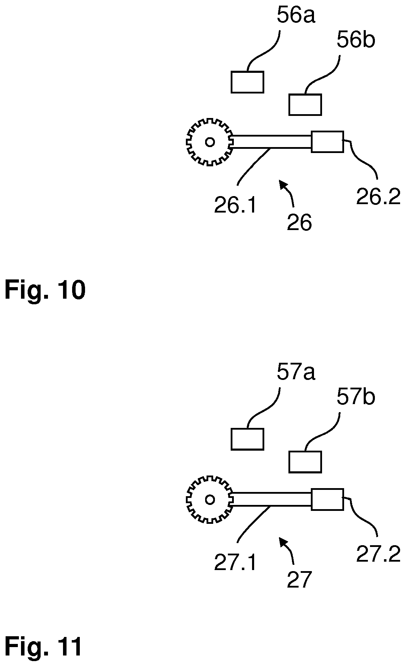

In Figur 10 ist gezeigt, dass das erste Bewegungselement 26 einen Hebel 26.1 aufweisen kann, und bspw. das Vergleichssensorelement 56 wenigstens zwei Sensormittel 56a, 56b aufweist. Gemäß einem Vorteil können die Sensormittel 56a, 56b beabstandet angeordnet sein, um eine Wegstrecke einer Bewegung des Hebels 26.1 zu erfassen. Hierzu kann am Hebel 26.1 ein Indikator, wie ein Magnetelement 26.2, befestigt sein, dessen Annäherung durch die Sensormittel 56a, 56b erfasst werden kann.

Alternativ oder zusätzlich kann auch das zweite Bewegungselement 27 einen Hebel 27.1 aufweisen, wie in Figur 11 dargestellt ist. Auch hier kann das Betätigungssensorelement 57 wenigstens zwei Sensormittel 57a, 57b aufweisen, welche die Bewegung eines Indikators, wie eines Magnetelements 27.2, an dem Hebel 27.1 erfassen können. Dies ermöglicht ebenfalls eine Wegstreckenmessung beim Hebel 27.1, um so die Drehbewegung zu erfassen.

Die voranstehende Erläuterung der Ausführungsformen beschreibt die vorliegende Erfindung ausschließlich im Rahmen von Beispielen.

### Bezugszeichenliste

- 1: Fahrzeug
- 2: bewegliches Teil, Tür, Heckklappe
- 3: Außenfläche
- 5: Schließvorrichtung
- 6: Benutzer

- 10: Griffvorrichtung
- 11: Griffteil
- 12: Griffübertragungselement
- 13: erster Steg
- 14: zweiter Steg
- 15: Trägerelement, Montageträger

- 20: Bewegungsvorrichtung
- 21: Betätigungsbereich
- 22: Achse
- 25: Bewegungselement, Rad, Welle
- 26: erstes Bewegungselement, aktives Bewegungselement
- 26.1: Hebel von 26
- 26.2: Magnetelement von 26

- 27: zweites Bewegungselement, passives Bewegungselement
- 27.1: Hebel von 27
- 27.2: Magnetelement von 27

- 28: Magnetelement

- 30: Antriebsvorrichtung

- 56: Vergleichssensorelement, erster Sensor

- 56a: erstes Sensormittel von 56
- 56b: zweites Sensormittel von 56

- 57: Betätigungssensorelement, zweiter Sensor
- 57a: erstes Sensormittel von 57
- 57b: zweites Sensormittel von 57

- 60: Übertragungselement

- 70: Entkopplungselement

- 80: Auswertevorrichtung

- 100: Verfahren

- 200: Erfassungssystem

- A: erster Bewegungsverlauf
- B: zweiter Bewegungsverlauf
- I: Ruhestellung
- II: Betriebsstellung, erste Ausstellung
- III: zweite Ausstellung
- N: Nord
- S: Süd

## Patentansprüche

1. Erfassungssystem (200) zur Detektion einer Betätigung bei einer Griffvorrichtung (10) eines Fahrzeuges (1), mit einer Bewegungsvorrichtung (20) zur Bewegung eines Griffteils (11) der Griffvorrichtung (10) von einer Ruhestellung (I) in eine Betriebsstellung (II), wobei
die Bewegungsvorrichtung (20) zur Bewirkung der Bewegung des Griffteils (11) in einen ersten Bewegungsverlauf (A) bringbar ist, und nach vollständiger Durchführung des ersten Bewegungsverlaufs (A) in einen zweiten Bewegungsverlauf (B) bringbar ist, **dadurch gekennzeichnet,**
**dass** ein Vergleichssensorelement (56) und ein Betätigungssensorelement (57) an der Bewegungsvorrichtung (20) angeordnet sind, sodass der erste Bewegungsverlauf (A) durch eine erste Erfassung des Vergleichssensorelements (56) und durch eine zweite Erfassung des Betätigungssensorelements (57) auswertbar ist, und der zweite Bewegungsverlauf (B) durch die zweite Erfassung des Betätigungssensorelements (57) auswertbar ist, wodurch die Betätigung detektierbar ist.

2. Erfassungssystem (200) nach Anspruch 1,
**dadurch gekennzeichnet,**
**dass** die Bewegungsvorrichtung (20) ein erstes Bewegungselement (26) und ein zweites Bewegungselement (27) umfasst, welche zur Bewegungsübertragung zumindest im ersten Bewegungsverlauf (A) miteinander gekoppelt sind, und insbesondere im zweiten Bewegungsverlauf (B) voneinander entkoppelt sind, wobei das Vergleichssensorelement (56) auf das erste Bewegungselement (26) ausgerichtet ist, um durch die erste Erfassung eine Bewegung des ersten Bewegungselements (26) zu erfassen, und das Betätigungssensorelement (57) auf das zweite Bewegungselement (27) ausgerichtet ist, um durch die zweite Erfassung eine Bewegung des zweiten Bewegungselements (27) zu erfassen.

3. Erfassungssystem (200) nach Anspruch 1 oder 2,
**dadurch gekennzeichnet,**
**dass** das Vergleichssensorelement (56) und das Betätigungssensorelement (57) mit einer Auswertevorrichtung (80) verbunden sind, sodass der erste Bewegungsverlauf (A) der Bewegungsvorrichtung (20) anhand der ersten und zweiten Erfassung durch die Auswertevorrichtung (80) auswertbar ist, und dabei insbesondere der erste Bewegungsverlauf (A) redundant überwachbar und/oder prüfbar ist, um eine Plausibilisierung und/oder Detektion eines fehlerhaften ersten Bewegungsverlaufs (A) durchzuführen
und/oder dass das Betätigungssensorelement (57) und das Vergleichssensorelement (56) als gleichartiger Sensor ausgeführt sind, vorzugsweise jeweils als Rotationssensor, bevorzugt ein magnetischer Sensor.

4. Griffvorrichtung (10) für ein bewegliches Teil (2) eines Fahrzeuges (1), insbesondere zum Öffnen des beweglichen Teils (2), insbesondere einer Tür oder Heckklappe oder dergleichen, wobei ein Erfassungssystem (200) nach einem der Ansprüche 1 bis 3 vorgesehen ist, und wobei das Griffteil (11) beweglich gelagert ist, wobei durch den wenigstens einen ersten Bewegungsverlauf (A) der Bewegungsvorrichtung (20) das Griffteil (11) von der Ruhestellung (I) in die Betriebsstellung (II) bewegbar ist, und das Griffteil (11) in der Betriebsstellung (II) manuell betätigbar ist, sodass bei der Betätigung wenigstens der zweite Bewegungsverlauf (B) der Bewegungsvorrichtung (20) erfolgt.

5. Griffvorrichtung (10) nach Anspruch 4,
**dadurch gekennzeichnet,**
**dass** wenigstens zwei Bewegungselemente (25) der Bewegungsvorrichtung (20) vorgesehen sind, insbesondere welche jeweils als zumindest ein drehbar gelagertes Rad (25) an einer feststehenden Achse (22) der Bewegungsvorrichtung (20) oder als zumindest eine drehbar gelagerte Welle (25) ausgeführt sind, wobei das Vergleichssensorelement (56) auf ein erstes Bewegungselement (26) und das Betätigungssensorelement (57) auf ein zweites Bewegungselement (27) ausgerichtet ist, wobei die Bewegungselemente (25) jeweils in unterschiedlicher Wirkverbindung mit dem Griffteil (11) bringbar sind, sodass eine erste Bewegung der Bewegungsvorrichtung (20) im ersten Bewegungsverlauf (A) sowohl durch das Vergleichssensorelement (56) und das Betätigungssensorelement (57) erfassbar ist, und eine zweite Bewegung der Bewegungsvorrichtung (20) im zweiten Bewegungsverlauf (B) unterschiedlich durch das Vergleichssensorelement (56) und das Betätigungssensorelement (57) erfassbar ist, sodass durch einen Vergleich der ersten und zweiten Erfassung die Betätigung detektierbar ist.

6. Griffvorrichtung (10) nach Anspruch 4 oder 5,
**dadurch gekennzeichnet,**
**dass** das Vergleichssensorelement (56) und das Betätigungssensorelement (57) im Bereich von unterschiedlichen Bewegungselementen (25) der Bewegungsvorrichtung (20) angeordnet sind, wobei die Bewegungselemente (25) jeweils rotierbar ausgeführt sind, insbesondere als Rotationselemente, vorzugsweise als Welle (25) und/oder als Rad (25), sodass vorzugsweise das Vergleichssensorelement (56) und das Betätigungssensorelement (57) als Rotationssensoren zur Erfassung einer Rotation der Bewegungselemente (25) ausgeführt sind.

7. Griffvorrichtung (10) nach einem der Ansprüche 4 bis 6,
**dadurch gekennzeichnet,**
**dass** das Vergleichssensorelement (56) und das Betätigungssensorelement (57) im Bereich von unterschiedlichen Bewegungselementen (25) der Bewegungsvorrichtung (20) angeordnet sind, wobei die Bewegungselemente (25) jeweils translatorisch feststehend in Bezug auf die Anordnung in der Griffvorrichtung (10) ausgebildet und bevorzugt innerhalb eines Trägerelements (15), insbesondere Montageträgers (15), der Griffvorrichtung (10) angeordnet sind
und/oder dass das Betätigungssensorelement (57) als ein Kurzhub-Sensor ausgeführt ist, sodass die Betätigung des Griffteils (11) im zweiten Bewegungsverlauf (B) als ein Kurzhub detektierbar ist, insbesondere anhand einer Auswertung einer Rotation eines Bewegungselements (25).

8. Griffvorrichtung (10) nach einem der Ansprüche 4 bis 7,
**dadurch gekennzeichnet,**
**dass** die Bewegungsvorrichtung (20) mit einer Antriebsvorrichtung (30), insbesondere einem Motor, verbunden ist, wobei durch die Antriebsvorrichtung (30) ein erstes Bewegungselement (26) der Bewegungsvorrichtung (20) direkt antreibbar ist, sodass eine Antriebsbewegung der Antriebsvorrichtung (30) an das erste Bewegungselement (26) übertragbar ist, und als eine erste Bewegung im ersten Bewegungsverlauf (A) an das Griffteil (11) übertragbar ist, und indirekt, insbesondere über das Griffteil (11), an ein zweites Bewegungselement (27) der Bewegungsvorrichtung (20) übertragbar ist.

9. Griffvorrichtung (10) nach einem der Ansprüche 4 bis 8,
**dadurch gekennzeichnet,**
**dass** ein erstes Bewegungselement (26) der Bewegungsvorrichtung (20) über ein Übertragungselement (60) mit dem Griffteil (11) in Wirkverbindung bringbar ist, sodass eine erste Bewegung im ersten Bewegungsverlauf (A) von dem ersten Bewegungselement (26) an das Übertragungselement (60) und dann an das Griffteil (11) übertragbar ist, wobei die erste Bewegung im ersten Bewegungsverlauf (A) und eine zweite Bewegung im zweiten Bewegungsverlauf (B) von dem Griffteil (11) an das zweite Bewegungselement (27) übertragbar sind, wobei ein Entkopplungselement (70) vorgesehen ist, um eine Übertragung der zweiten Bewegung des Griffteils (11) an das erste Bewegungselement (26) zu kompensieren und/oder zu verhindern und/oder zu verändern.

10. Griffvorrichtung (10) nach einem der Ansprüche 4 bis 9,
**dadurch gekennzeichnet,**
**dass** das Griffteil (11) in der Ruhestellung (I) bündig zur Außenseite des beweglichen Teils (2), insbesondere einer Fahrzeugkarossie und/oder eines Türblechs, angeordnet ist, und in der Betriebsstellung (II) aus der Außenseite des beweglichen Teils (2) vorsprungartig hervorsteht, sodass eine manuelle Betätigung, insbesondere Bewegung, des Griffteils (11) durch einen Benutzer (6) des Fahrzeuges (1) durchführbar ist und/oder dass die Bewegungselemente (25) als translatorisch feststehende Teile der Griffvorrichtung (10) ausgeführt sind, sodass eine translatorische Bewegung der Bewegungselemente (25) durch die Bewegung des Griffteils (11) im Wesentlichen verhindert ist.

11. Verfahren zur Detektion einer Betätigung bei einer Griffvorrichtung (10) nach einem der Ansprüche 4 bis 10 für ein bewegliches Teil (2) eines Fahrzeuges (1), insbesondere zum Öffnen des beweglichen Teils (2), insbesondere einer Tür oder Heckklappe oder dergleichen, mit einem beweglich gelagerten Griffteil (11) und einer Bewegungsvorrichtung (20), wobei
durch wenigstens einen ersten Bewegungsverlauf (A) der Bewegungsvorrichtung (20) das Griffteil (11) von einer Ruhestellung (I) in eine Betriebsstellung (II) bewegt wird, und das Griffteil (11) in der Betriebsstellung (II) zur Betätigung freigegeben ist, sodass bei dieser Betätigung wenigstens ein zweiter Bewegungsverlauf (B) der Bewegungsvorrichtung (20) erfolgt,
**gekennzeichnet durch die nachfolgenden Schritte:**
- Durchführen wenigstens einer ersten Erfassung durch wenigstens ein Vergleichssensorelement (56) zur Bestimmung eines ersten Erfassungsergebnisses,
- Durchführen wenigstens einer zweiten Erfassung durch wenigstens ein Betätigungssensorelement (57) zur Bestimmung eines zweiten Erfassungsergebnisses,
- Vergleichen des ersten Erfassungsergebnisses mit dem zweiten Erfassungsergebnis zur Bestimmung eines Vergleichsergebnisses, sodass anhand des Vergleichs der zweite Bewegungsverlauf (B) detektiert wird, um die Betätigung des Griffteils (11) zu detektieren.

12. Verfahren (100) nach Anspruch 11,
**dadurch gekennzeichnet,**
**dass** die Bewegungsvorrichtung (20) ein erstes Bewegungselement (26) und ein zweites Bewegungselement (27) umfasst, welche im ersten Bewegungsverlauf (A) in einer ersten Bewegungsart, insbesondere gleichartig, und im zweiten Bewegungsverlauf (B) in einer zweiten Bewegungsart, insbesondere unterschiedlich, bewegt werden, sodass der Unterschied der Bewegung für die Betätigung des Griffteils (11) spezifisch ist, und insbesondere bei dem Vergleichen ausgewertet wird.

13. Verfahren (100) nach Anspruch 11 oder 12,
**dadurch gekennzeichnet,**
**dass** das Griffteil (11) in der Betriebsstellung (II) zur Durchführung der, insbesondere manuellen, Betätigung zum Öffnen des beweglichen Teils (2), insbesondere ein Ziehen am Griffteil (11), und zur Durchführung wenigstens einer weiteren, insbesondere manuellen, Betätigung, insbesondere ein Drücken oder Ziehen am Griffteil (11), freigegeben ist, sodass bei der weiteren Betätigung wenigstens ein weiterer Bewegungsverlauf der Bewegungsvorrichtung (20) erfolgt,
wobei die Bewegungsvorrichtung (20) ein erstes Bewegungselement (26) und ein zweites Bewegungselement (27) umfasst, welche im weiteren Bewegungsverlauf in einer ersten Bewegungsart, insbesondere derart gleichartig, bewegt werden, dass die Betätigung zum Öffnen von der mindestens einen weiteren Betätigung anhand des Vergleichsergebnisses unterschieden wird
und/oder dass im ersten Bewegungsverlauf (A) das Griffteil (11) gegenüber dem beweglichen Teil (2) in eine erste Ausstellung (II) gebracht wird, insbesondere mit einem Abstand zu einer Außenfläche (3) des beweglichen Teils (2) von mindestens 1 cm oder mindestens 2 cm oder mindestens 4 cm oder mindestens 6 cm, wobei dann die Betätigung zum Öffnen des beweglichen Teils (2) dadurch erfolgt, dass das Griffteil (11) im zweiten Bewegungsverlauf (B) manuell durch einen Benutzer (6) des Fahrzeuges (1) in eine zweite Ausstellung (III) gebracht wird, wodurch eine Erhöhung des Abstands zur Außenfläche (3) des beweglichen Teils (2) bewirkt wird, bevorzugt im Bereich von 1 mm bis 10 mm, besonders bevorzugt 2 mm bis 3 mm, wobei die Erhöhung anhand des Vergleichsergebnisses detektiert wird.

14. Verfahren (100) nach einem der Ansprüche 11 bis 13,
**dadurch gekennzeichnet,**
**dass** der zweite Bewegungsverlauf (B) dann detektiert wird, wenn
- das Betätigungssensorelement (57) eine erforderliche Ausstellung des Griffteils (11) im Bereich von 1 mm bis 10 mm, bevorzugt 2 mm bis 3 mm, erfasst, insbesondere anhand der Erfassung einer erforderlichen Rotation eines zweiten Bewegungselements (27) im Bereich von 1° bis 10°, vorzugsweise 2° bis 3°, und zudem
- eine derartige Erfassung beim Vergleichssensorelement (56) ausbleibt, vorzugsweise anhand der Erfassung einer Rotation eines erstes Bewegungselements (26), welche bevorzugt maximal 1° bis 2° betragen darf.

15. Verfahren (100) nach einem der Ansprüche 11 bis 14,
**dadurch gekennzeichnet,**
**dass** der erste Bewegungsverlauf (A), insbesondere eine anhand der ersten und zweiten Erfassung ermittelte Position des Griffteils (11) in der Betriebsstellung (II), bei dem Vergleichen, und/oder Auswerten des Vergleichsergebnisses, als Referenz für die Detektion der Betätigung des Griffteils (11) genutzt wird, vorzugsweise zur Kalibrierung und/oder Konfiguration eines Startwertes zur Bestimmung der erforderlichen Ausstellung des Griffteils (11) und/oder der erforderlichen Rotation, ab welcher die Betätigung detektiert wird
und/oder dass ein Erfassungssystem (200) nach einem der Ansprüche 1 bis 3 und/oder eine Griffvorrichtung (10) nach einem der Ansprüche 4 bis 10 betreibbar ist.

## Claims

1. Sensing system (200) for detecting an actuation at a handle device (10) of a vehicle (1), comprising a movement device (20) for moving a handle part (11) of the handle device (10) from a rest position (I) into an operating position (II), wherein
the movement device (20) can be brought into a first course of movement (A) to effect the movement of the handle part (11), and can be brought into a second course of movement (B) after the first course of movement (A) has been completed,
**characterized in that**
a comparison sensor element (56) and an actuation sensor element (57) are arranged on the movement device (20), so that the first course of movement (A) can be evaluated by a first sensing of the comparison sensor element (56) and by a second sensing of the actuation sensor element (57), and the second course of movement (B) can be evaluated by the second sensing of the actuation sensor element (57), whereby the actuation can be detected.

2. Sensing system (200) according to claim 1,
**characterized in that**
the movement device (20) comprises a first movement element (26) and a second movement element (27), which are coupled to one another for movement transmission at least in the first course of movement (A), and are decoupled from one another in particular in the second course of movement (B), wherein the comparison sensor element (56) is aligned with the first movement element (26) to sense a movement of the first movement element (26) by the first sensing, and the actuation sensor element (57) is aligned with the second movement element (27) to sense a movement of the second movement element (27) by the second sensing.

3. Sensing system (200) according to claim 1 or 2,
**characterized in that**
the comparison sensor element (56) and the actuation sensor element (57) are connected to an evaluation device (80), so that the first course of movement (A) of the movement device (20) can be evaluated on the basis of the first and second sensing by the evaluation device (80), and in particular the first course of movement (A) can be monitored and/or tested redundantly in order to carry out a plausibility check and/or detection of a faulty first course of movement (A)
and/or the actuation sensor element (57) and the comparison sensor element (56) are designed as an identical sensor, preferably in each case as a rotation sensor, preferably a magnetic sensor.

4. Handle device (10) for a movable part (2) of a vehicle (1), in particular for opening the movable part (2), in particular a door or tailgate or the like, wherein a sensing system (200) according to one of claims 1 to 3 is provided, and wherein the handle part (11) is movably mounted, wherein
by means of the at least one first course of movement (A) of the movement device (20) the handle part (11) can be moved from the rest position (I) into the operating position (II), and the handle part (11) can be manually actuated in the operating position (II), so that during the actuation at least the second course of movement (B) of the movement device (20) occurs.

5. Handle device (10) according to claim 4,
**characterized in that**
at least two movement elements (25) of the movement device (20) are provided, in particular which are each designed as at least one rotatably mounted wheel (25) on a fixed axis (22) of the movement device (20) or as at least one rotatably mounted shaft (25), wherein the comparison sensor element (56) is aligned with a first movement element (26) and the actuation sensor element (57) is aligned with a second movement element (27), wherein the movement elements (25) can be each brought into different operative connection with the handle part (11), so that a first movement of the movement device (20) in the first course of movement (A) can be sensed both by the comparison sensor element (56) and the actuation sensor element (57), and a second movement of the movement device (20) in the second course of movement (B) can be sensed differently by the comparison sensor element (56) and the actuation sensor element (57), so that the actuation can be detected by a comparison of the first and second sensing.

6. Handle device (10) according to claim 4 or 5,
**characterized in that**
the comparison sensor element (56) and the actuation sensor element (57) are arranged in the region of different movement elements (25) of the movement device (20), wherein the movement elements (25) each are designed to be rotatable, in particular as rotational elements, preferably as a shaft (25) and/or as a wheel (25), so that preferably the comparison sensor element (56) and the actuation sensor element (57) are designed as rotational sensors for sensing a rotation of the movement elements (25).

7. Handle device (10) according to one of claims 4 to 6,
**characterized in that**
the comparison sensor element (56) and the actuation sensor element (57) are arranged in the region of different movement elements (25) of the movement device (20), wherein the movement elements (25) each are designed to be fixed in translation with respect to the arrangement in the handle device (10) and preferably are arranged within a carrier element (15), in particular a mounting carrier (15), of the handle device (10) and/or the actuation sensor element (57) is designed as a short-stroke sensor, so that the actuation of the handle part (11) in the second course of movement (B) can be detected as a short stroke, in particular by means of an evaluation of a rotation of a movement element (25).

8. Handle device (10) according to one of claims 4 to 7,
**characterized in that**
the movement device (20) is connected to a drive device (30), in particular a motor, wherein a first movement element (26) of the movement device (20) can be driven directly by the drive device (30), so that a drive movement of the drive device (30) can be transmitted to the first movement element (26), and can be transmitted as a first movement in the first course of movement (A) to the handle part (11), and can be transmitted indirectly, in particular via the handle part (11), to a second movement element (27) of the movement device (20).

9. Handle device (10) according to one of the claims 4 to 8,
**characterized in that**
a first movement element (26) of the movement device (20) can be brought into operative connection with the handle part (11) via a transmission element (60), so that a first movement in the first course of movement (A) can be transmitted from the first movement element (26) to the transmission element (60) and then to the handle part (11), wherein the first movement in the first course of movement (A) and a second movement in the second course of movement (B) can be transmitted from the handle part (11) to the second movement element (27), wherein a decoupling element (70) is provided in order to compensate and/or prevent and/or change a transmission of the second movement of the handle part (11) to the first movement element (26).

10. Handle device (10) according to one of claims 4 to 9,
**characterized in that**
the handle part (11) is arranged flush with the outside of the movable part (2), in particular of a vehicle body and/or a door panel, in the rest position (I) and protrudes in a projection-like manner from the outside of the movable part (2) in the operating position (II), so that a manual actuation, in particular movement, of the handle part (11) can be carried out by a user (6) of the vehicle (1)
and/or the movement elements (25) are designed as translationally fixed parts of the handle device (10), so that a translatory movement of the movement elements (25) is essentially prevented by the movement of the handle part (11).

11. Method for detecting an actuation at a handle device (10) according to one of claims 4 to 10 for a movable part (2) of a vehicle (1), in particular for opening the movable part (2), in particular a door or tailgate or the like, with a movably mounted handle part (11) and a movement device (20), wherein
the handle part (11) is moved from a rest position (I) into an operating position (II) by at least one first course of movement (A) of the movement device (20), and the handle part (11) is released for actuation in the operating position (II), so that at least one second course of movement (B) of the movement device (20) occurs during this actuation,
**characterized by the following steps:**
- performing at least a first sensing by at least one comparison sensor element (56) to determine a first sensing result,
- performing at least one second sensing by at least one actuation sensor element (57) to determine a second sensing result,
- comparing the first sensing result with the second sensing result to determine a comparison result, so that the second course of movement (B) is detected on the basis of the comparison to detect the actuation of the handle part (11).

12. Method (100) according to claim 11,
**characterized in that**
the movement device (20) comprises a first movement element (26) and a second movement element (27), which are moved in the first course of movement (A) in a first movement type, in particular in the same way, and in the second course of movement (B) in a second movement type, in particular differently, so that the difference in the movement is specific to the actuation of the handle part (11), and is evaluated in particular during the comparison.

13. Method (100) according to claim 11 or 12,
**characterized in that**
the handle part (11) is released in the operating position (II) for carrying out the, in particular manual, actuation for opening the movable part (2), in particular a pulling action on the handle part (11), and for carrying out at least one further, in particular manual, actuation, in particular a pushing or pulling action on the handle part (11), so that at least one further course of movement of the movement device (20) occurs during the further actuation, wherein the movement device (20) comprises a first movement element (26) and a second movement element (27), which are moved in the further course of movement in a first movement type, in particular in the same way, such that the actuation for opening is distinguished from the at least one further actuation on the basis of the comparison result and/or in the first course of movement (A), the handle part (11) is brought into a first position (II) with respect to the movable part (2), in particular at a distance from an outer surface (3) of the movable part (2) of at least 1 cm or at least 2 cm or at least 4 cm or at least 6 cm, wherein the actuation for opening the movable part (2) then occurs in such a way that the handle part (11) is brought manually by a user (6) of the vehicle (1) into a second position (III) in the second course of movement (B), as a result of which an increase in the distance from the outer surface (3) of the movable part (2) is caused, preferably in the range from 1 mm to 10 mm, particularly preferably 2 mm to 3 mm, wherein the increase is detected by means of the comparison result.

14. Method (100) according to one of claims 11 to 13,
**characterized in that**
the second course of movement (B) is detected when
- the actuation sensor element (57) senses a required position of the handle part (11) in the range from 1 mm to 10 mm, preferably 2 mm to 3 mm, in particular by sensing a required rotation of a second movement element (27) in the range from 1° to 10°, preferably 2° to 3°, and in addition
- such a detection is absent in the comparison sensor element (56), preferably on the basis of the sensing of a rotation of a first movement element (26), which may preferably be at most 1° to 2°.

15. Method (100) according to one of claims 11 to 14,
**characterized in that**
the first course of movement (A), in particular a position of the handle part (11) in the operating position (II) determined on the basis of the first and second sensing, is used as a reference for the detection of the actuation of the handle part (11) during the comparison and/or evaluation of the comparison result, preferably for the calibration and/or configuration of a starting value for determining the required position of the handle part (11) and/or the required rotation from which the actuation is detected and/or a sensing system (200) can be operated according to one of claims 1 to 3 and/or a handle device (10) can be operated according to one of claims 4 to 10.

## Revendications

1. Système de détection (200) pour détecter un actionnement dans un dispositif de poignée (10) d'un véhicule (1), avec un dispositif de déplacement (20) pour déplacer une partie de poignée (11) du dispositif de poignée (10) d'une position de repos (I) dans une position de fonctionnement (II), dans lequel
le dispositif de déplacement (20) peut être amené dans une première course de déplacement (A) pour effectuer le déplacement de la partie de poignée (11), et peut être amené dans une deuxième course de déplacement (B) après que la première course de déplacement (A) ait été effectuée complètement,
**caractérisé en ce qu'**
un élément capteur de comparaison (56) et un élément capteur d'actionnement (57) sont disposés sur le dispositif de déplacement (20), de sorte que la première course de déplacement (A) peut être évalué par une première détection de l'élément capteur de comparaison (56) et par une deuxième détection de l'élément capteur d'actionnement (57), et le deuxième course de déplacement (B) peut être évalué par la deuxième détection de l'élément capteur d'actionnement (57), l'actionnement pouvant être détecté.

2. Système de détection (200) selon la revendication 1,
**caractérisé en ce que**
le dispositif de déplacement (20) comprend un premier élément de déplacement (26) et un deuxième élément de déplacement (27), qui sont couplés l'un à l'autre pour la transmission de déplacement au moins dans la première course de déplacement (A), et sont découplés l'un de l'autre en particulier dans la deuxième course de déplacement (B), dans lequel l'élément capteur de comparaison (56) est aligné avec le premier élément de déplacement (26) pour détecter un mouvement du premier élément de déplacement (26) par la première détection, et l'élément capteur d'actionnement (57) est aligné avec le deuxième élément de déplacement (27) pour détecter un mouvement du deuxième élément de déplacement (27) par la deuxième détection.

3. Système de détection (200) selon la revendication 1 ou 2,
**caractérisé en ce que**
l'élément capteur de comparaison (56) et l'élément capteur d'actionnement (57) sont reliés à un dispositif d'évaluation (80), de sorte que la première course de déplacement (A) du dispositif de déplacement (20) peut être évaluée au moyen de la première et de la deuxième détection par le dispositif d'évaluation (80), et en particulier la première course de déplacement (A) peut être surveillée et/ou contrôlée de manière redondante afin d'effectuer un contrôle de plausibilité et/ou de détecter une première course de déplacement (A) défectueuse
et/ou l'élément capteur d'actionnement (57) et l'élément capteur de comparaison (56) sont conçus comme un capteur identique, de préférence dans chaque cas comme un capteur de rotation, de préférence un capteur magnétique.

4. Dispositif de poignée (10) pour une partie mobile (2) d'un véhicule (1), en particulier pour ouvrir la partie mobile (2), en particulier une porte ou un hayon ou similaire, dans lequel il est prévu un système de détection (200) selon l'une des revendications 1 à 3, et dans lequel la partie de poignée (11) est montée de manière mobile, dans lequel au moyen du l'au moins une première course de déplacement (A) du dispositif de déplacement (20) la partie de poignée (11) peut être déplacée de la position de repos (I) à la position de fonctionnement (II) et la partie de poignée (11) peut être actionnée manuellement dans la position de fonctionnement (II), de sorte que lors de l'actionnement au moins la deuxième course de déplacement (B) du dispositif de déplacement (20) a lieu.

5. Dispositif de poignée (10) selon la revendication 4,
**caractérisé en ce que**
au moins deux éléments de déplacement (25) du dispositif de déplacement (20) sont prévus, en particulier qui sont réalisés chacun sous la forme d'au moins une roue (25) montée à rotation sur un axe fixe (22) du dispositif de déplacement (20) ou sous la forme d'au moins un arbre (25) monté à rotation, l'élément capteur de comparaison (56) étant aligné sur un premier élément de déplacement (26) et l'élément capteur d'actionnement (57) sur un deuxième élément de déplacement (27), les éléments de déplacement (25) pouvant être mis en liaison active différente avec la partie de poignée (11) respective, de sorte qu'un premier déplacement du dispositif de déplacement (20) dans la première course de déplacement (A) peut être détecté à la fois par l'élément capteur de comparaison (56) et l'élément capteur d'actionnement (57), et un deuxième déplacement du dispositif de déplacement (20) dans la deuxième course de déplacement (B) peut être détecté différemment par l'élément capteur de comparaison (56) et l'élément capteur d'actionnement (57), de sorte que l'actionnement peut être détecté par une comparaison de la première et de la deuxième détection.

6. Dispositif de poignée (10) selon la revendication 4 ou 5,
**caractérisé en ce que**
l'élément capteur de comparaison (56) et l'élément capteur d'actionnement (57) sont disposés dans la zone de différents éléments de déplacement (25) du dispositif de déplacement (20), les éléments de déplacement (25) étant chacun conçus de manière rotatif, en particulier comme éléments de rotation, de préférence comme arbre (25) et/ou comme roue (25), de sorte que de préférence l'élément capteur de comparaison (56) et l'élément capteur d'actionnement (57) sont conçus comme capteurs de rotation pour détecter une rotation des éléments de déplacement (25).

7. Dispositif de poignée (10) selon l'une des revendications 4 à 6,
**caractérisé en ce que**
l'élément capteur de comparaison (56) et l'élément capteur d'actionnement (57) sont disposés dans la zone de différents éléments de déplacement (25) du dispositif de déplacement (20), les éléments de déplacement (25) étant chacun conçus pour être fixés en translation par rapport à la disposition dans le dispositif de poignée (10) et étant disposés de préférence à l'intérieur d'un élément de support (15), en particulier un support de montage (15), du dispositif de poignée (10)
et/ou **en ce que** l'élément capteur d'actionnement (57) est conçu comme un capteur à faible course, de sorte que l'actionnement de la partie poignée (11) dans la deuxième course de déplacement (B) peut être détecté comme une faible course, en particulier par une évaluation d'une rotation d'un élément de déplacement (25).

8. Dispositif de poignée (10) selon l'une des revendications 4 à 7,
**caractérisé en ce que**
le dispositif de déplacement (20) est relié à un dispositif d'entrainement (30), en particulier à un moteur, un premier élément de déplacement (26) du dispositif de déplacement (20) pouvant être entrainé directement par le dispositif d'entrainement (30), de sorte qu'un déplacement d'entrainement du dispositif d'entrainement (30) peut être transmis au premier élément de déplacement (26), et peut être transmis comme premier déplacement dans la première course de déplacement (A) à la partie de poignée (11), et peut être transmis indirectement, en particulier par l'intermédiaire de la partie de poignée (11), à un deuxième élément de déplacement (27) du dispositif de déplacement (20).

9. Dispositif de poignée (10) selon l'une des revendications 4 à 8,
**caractérisé en ce qu'**
un premier élément de déplacement (26) du dispositif de déplacement (20) peut être mis en liaison active avec la partie de poignée (11) par l'intermédiaire d'un élément de transmission (60), de sorte qu'un premier déplacement dans la première course de déplacement (A) peut être transmis du premier élément de déplacement (26) à l'élément de transmission (60) et ensuite à la partie de poignée (11), dans lequel le premier déplacement de la première course de déplacement (A) et un deuxième déplacement de la deuxième course de déplacement (B) peuvent être transmis de la partie de poignée (11) au deuxième élément de déplacement (27), dans lequel un élément de découplage (70) est prévu pour compenser et/ou empêcher et/ou modifier la transmission du deuxième déplacement de la partie de poignée (11) au premier élément de déplacement (26).

10. Dispositif de poignée (10) selon l'une des revendications 4 à 9,
**caractérisé en ce que**
la partie de poignée (11), en position de repos (I), est disposée à fleur de la face extérieure de la partie mobile (2), en particulier d'une carrosserie de véhicule et/ou d'un panneau de porte, et, en position de fonctionnement (II), dépasse en saillie de la face extérieure de la partie mobile (2), de sorte que l'actionnement manuel, en particulier le déplacement, de la partie de poignée (11) peut être effectué par un utilisateur (6) du véhicule (1) et/ou **en ce que** les éléments de déplacement (25) sont conçus comme des parties fixes en translation du dispositif de poignée (10), de sorte qu'un déplacement de translation des éléments de déplacement (25) est essentiellement empêché par le déplacement de la partie de poignée (11).

11. Procédé pour détecter un actionnement dans un dispositif de poignée (10) selon l'une des revendications 4 à 10 pour une partie mobile (2) d'un véhicule (1), en particulier pour ouvrir la partie mobile (2), en particulier une porte ou un hayon ou similaire, avec une partie de poignée (11) montée de manière de déplacement et un dispositif de déplacement (20), dans lequel
la partie de poignée (11) est déplacée d'une position de repos (I) dans une position de fonctionnement (II) par au moins une première course de déplacement (A) du dispositif de déplacement (20), et la partie de poignée (11) est libérée pour être actionnée dans la position de fonctionnement (II), de sorte qu'au moins une deuxième course de déplacement (B) du dispositif de déplacement (20) a lieu pendant cet actionnement,
**caractérisé par les étapes suivantes** :
- effectuer au moins une première détection par au moins un élément capteur de comparaison (56) pour déterminer un premier résultat de détection,
- effectuer au moins une deuxième détection par au moins un élément capteur d'actionnement (57) pour déterminer un deuxième résultat de détection,
- comparer le premier résultat de détection avec le deuxième résultat de détection pour déterminer un résultat de comparaison, de sorte que la deuxième course de déplacement (B) soit détectée sur la base de la comparaison pour détecter l'actionnement de la partie de poignée (11).

12. Procédé (100) selon la revendication 11,
**caractérisé en ce que**
le dispositif de déplacement (20) comprend un premier élément de déplacement (26) et un deuxième élément de déplacement (27), qui sont déplacés dans la première course de déplacement (A) selon un premier type de déplacement, en particulier de la même manière, et dans la deuxième course de déplacement (B) selon un deuxième type de déplacement, en particulier de manière différente, de sorte que la différence de déplacement est spécifique à l'actionnement de la partie de poignée (11), et est évaluée en particulier lors de la comparaison.

13. Procédé (100) selon la revendication 11 ou 12,
**caractérisé en ce que**
la partie de poignée (11) est libérée dans la position de fonctionnement (II) pour effectuer l'actionnement, en particulier manuel, pour ouvrir la partie mobile (2), en particulier une action de traction sur la partie de poignée (11), et pour effectuer au moins un autre actionnement, en particulier manuel, en particulier une action de poussée ou de traction sur la partie de poignée (11), de sorte qu'au moins une autre course de déplacement du dispositif de déplacement (20) a lieu pendant l'autre actionnement,
dans lequel le dispositif de déplacement (20) comprend un premier élément de déplacement (26) et un deuxième élément de déplacement (27) qui, au cours de la course de déplacement, sont déplacés dans un premier type de déplacement, en particulier de la même manière, de telle sorte que l'actionnement pour l'ouverture se distingue de l'au moins un autre actionnement sur la base du résultat de la comparaison et/ou **en ce que**, dans la première course de déplacement (A), la partie de poignée (11) est amenée dans une première position (II) par rapport à la partie mobile (2), en particulier à une distance d'au moins 1 cm ou d'au moins 2 cm ou d'au moins 4 cm ou d'au moins 6 cm d'une surface extérieure (3) de la partie mobile (2), l'actionnement pour l'ouverture de la partie mobile (2) s'effectuant alors en conséquence, **en ce que** la partie de poignée (11) est amenée manuellement par un utilisateur (6) du véhicule (1) dans une deuxième position (III) dans la deuxième course de déplacement (B), ce qui a pour effet d'augmenter la distance par rapport à la surface extérieure (3) de la partie mobile (2), de préférence dans la plage de 1 mm à 10 mm, en particulier de préférence de 2 mm à 3 mm, l'augmentation étant détectée au moyen du résultat de la comparaison.

14. Procédé (100) selon l'une des revendications 11 à 13,
**caractérisé en ce que**
la deuxième course de déplacement (B) est détecté lorsque
- l'élément capteur d'actionnement (57) détecte une position requise de la partie de poignée (11) dans la plage de 1 mm à 10 mm, de préférence de 2 mm à 3 mm, en particulier en détectant une rotation requise d'un deuxième élément de déplacement (27) dans la plage de 1° à 10°, de préférence de 2° à 3°, et en outre
- une telle détection est absente dans l'élément capteur de comparaison (56), de préférence sur la base de la détection d'une rotation d'un premier élément de déplacement (26), qui peut de préférence être au maximum de 1° à 2°.

15. Procédé (100) selon l'une des revendications 11 à 14,
**caractérisé en ce que**
la première course de déplacement (A), en particulier une position de la partie de poignée (11) dans la position de fonctionnement (II) déterminée sur la base des première et deuxième détections, est utilisée comme référence pour la détection de l'actionnement de la partie de poignée (11) lors de la comparaison et/ou l'évaluation du résultat de la comparaison, de préférence pour le calibrage et/ou la configuration d'une valeur de départ pour déterminer la position nécessaire de la partie de poignée (11) et/ou la rotation nécessaire à partir de laquelle l'actionnement est détecté
et/ou **en ce qu'**un système de détection (200) peut être utilisé selon l'une des revendications 1 à 3 et/ou un dispositif de poignée (10) peut être utilisé selon l'une des revendications 4 à 10.
